# EUROPEAN PATENT SPECIFICATION

(11) **EP 3 107 389 B1**
(45) Date of publication and mention of the grant of the patent: **21.07.2021**
(21) Application number: 15705312.5
(22) Date of filing: 19.02.2015
(51) Int. Cl.: A01N 37/46, A01N 43/56, A01N 47/24, A01N 43/50, A01N 43/54, A01N 43/84, A01N 43/653, A01N 25/30, A01P 3/00

(54) **AQUEOUS CO-FORMULATION OF METALAXYL**
WÄSSRIGE CO-FORMULIERUNG VON METALAXYL
CO-FORMULATION AQUEUSE DE MÉTALAXYL

(30) Priority: 19.02.2014 EP 14155797
(43) Date of publication of application: 28.12.2016
(73) Proprietor: BASF SE, 67056 Ludwigshafen am Rhein (DE)
(72) Inventor: KLIMOV, Evgueni, 67071 Ludwigshafen (DE); KLAMCZYNSKI, Katharine, 67459 Böhl-Iggelheim (DE); MERTOGLU, Murat, 67063 Ludwigshafen (DE)
(74) Representative: BASF IP Association
(86) International application number: PCT/EP2015/053481
(87) International publication number: WO 2015/124662

(56) References cited:
- EP-A2- 0 074 329
- WO-A2-2007/054469
- WO-A2-2010/092028
- WO-A2-2011/006896
- WO-A2-2011/012493
- CN-A- 1 864 486
- CN-A- 102 217 610
- CN-B- 102 318 610

## Description

The present invention relates to an aqueous co-formulation of metalaxyl with at least one further sparingly water-soluble organic pesticide compound PC1 having a solubility in water of at most 1 g/l at 20°C and a melting point in the range from 40 to 100°C and optionally a further pesticide having a melting point of above 100°C. The invention also relates to a method for producing such an aqueous co-formulation,

### BACKGROUND OF INVENTION

Metalaxyl is a pesticide compound having systemic fungicidal activity. Metalaxyl is the common name of methyl {[(2,6-dimethylphenyl)-methoxyacetyl]amino) propionate (IUPAC). Metalaxyl, in particular its D enantiomer metalaxyl M, is used in foliar and soil applications against a large number of fungal diseases in crop plants caused by air- and soilborne pathogens. Frequently, metalaxyl is used for treating seed, in particular seed of cereals, such as maize and sorghum, legumes, such as peas, and sunflowers.

Due to its physicochemical properties, metalaxyl is usually formulated as a solid formulation, e.g. as a wettable powder WP, as granules GR or as a powder for dry seed treatment (DS formulation). Metalaxyl may also be formulated as an aqueous flowable, in particular for the purpose of seed treatment.

In order to increase its activity spectrum, metalaxyl may be employed together with one or more further pesticides, in particular from the groups of fungicides and insecticides. Usually co-application of metalaxyl with further pesticides is achieved by tank-mixing a formulation of metalaxyl with a formulation of the further pesticide.

WO 2007/054469 describes fungicidal mixtures comprising triticonazol, pyraclostrobin and an acylalanin, such as metalyl-M or kiralaxyl. A co-formulation is not described therein.

CN 102 318 610 discloses a compound germicidal position and an application thereof. The germicidal composition comprises 1-30% of chlorantraniliprole, 1-30% of azoxystrobin, 1-35% of fludioxonil, 1-35% of metalaxyl, 1-5% of dispersants, 1-5% of wetting agents, 1-5% of additives, and the balance of fillers or deionized water.

CN 102 217 610 A discloses an agrochemical composition containing picooxystrobin and amides selected from any one of the following fungicides: Dimethomorph, Metalaxyl, Metalaxyl, Benalaxyl, Benalaxyl, Fluonamide, Pyrimorph.

For many purposes, in particular for the purpose of seed treatment, it is highly desirable to provide aqueous co-formulations of metalaxyl, in particular metalaxyl M, with further pesticides. However, when trying to co-formulate metalaxyl with an organic pesticide in an aqueous co-formulation, one faces severe problems with regard to formulation stability, if the further pesticide is a low melting pesticide, e.g. a pesticide with a melting point in the range from 40 to 100°C, having a limited water-solubility, e.g. at most 1 g/l at 20°C.

Therefore, there is a strong need for providing aqueous co-formulations of metalaxyl with at least one further sparingly water-soluble low-melting organic pesticide compound PC having a solubility in water of at most 1 g/l at 20°C and a melting point in the range from 40 to 100°C, in particular from 45 to 90°C.

### SUMMARY OF INVENTION

It was surprisingly found, that the above problems of co-formulating metalaxyl can be overcome by including providing a co-formulation of metalaxyl and a low-melting organic pesticide wherein metalaxyl is essentially present dissolved in the aqueous phase and where the surfactant comprises at least one salt of an oligomer or polymer having a plurality of arylsulfonate groups.

Therefore, the present invention relates to an aqueous co-formulation of metalaxyl, which contains:
i. metalaxyl, in particular metalaxyl-M;
ii. at least one organic pesticide compound PC1, which has a solubility in water of at most 1 g/l at 20°C and a melting point in the range from 40 to 100°C; and
iii. an aqueous phase containing water and at least one surfactant;
   wherein the at least one organic pesticide compound PC1 is present in the form of particles suspended in the aqueous phase and where at least 95 % of the metalaxyl present in the aqueous co-formulation is present dissolved in the aqueous phase and where the surfactant comprises at least one salt of an oligomer or polymer having a plurality of arylsulfonate groups selected from the group consisting of the salts of naphthalinsulfonic acid formaldehyde condensates, phenolsulfonic acid formaldehyde condensates, naphthalinsulfonic acid urea formaldehyde condensates and phenolsulfonic acid formaldehyde urea condensates, and mixtures thereof,
   which is obtainable by a process comprising
   a) providing a suspension of metalaxyl in an aqueous phase containing water, the at least one surfactant, which comprises the at least one salt of an oligomer or polymer having a plurality of arylsulfonate groups;
   b) treating the suspension until at least 98% of the metalaxyl present in the aqueous suspension of step a) is present in dissolved form, to obtain an aqueous composition of metalaxyl, wherein metalaxyl is present in dissolved form;
   c) mixing the aqueous composition of metalaxyl obtained in step b) with an aqueous suspension of the further organic pesticide compound PC1.

The invention also relates to a process for preparing such formulations, which comprises the following steps:
a) providing a suspension of metalaxyl in an aqueous phase containing water, at least one surfactant, which comprises the at least one salt of an oligomer or polymer having a plurality of arylsulfonate groups,
b) treating the suspension until at least 98% of the metalaxyl present in the aqueous suspension of step a) is present in dissolved form, to obtain an aqueous composition of metalaxyl, wherein metalaxyl is present in dissolved form;
c) mixing the aqueous composition of metalaxyl obtained in step b) with an aqueous suspension of the further organic pesticide compound PC1.

The invention is based on the surprising finding that small amounts of undissolved metalaxyl impart instability to aqueous suspensions of a sparingly water-soluble low-melting pesticide, while aqueous suspensions of sparingly water-soluble higher melting pesticides are not affected. It is also surprising that such instability is not observed, when the aqueous suspension of a sparingly water-soluble low-melting pesticide is contacted with another pesticide, in particular with a sparingly water-soluble pesticide having a melting point of above 100°C, which is different from metalaxyl. Surprisingly, the salts of oligomers or polymers having a plurality of arylsulfonate groups assist in solubilizing metalaxyl in the aqueous phase.

### DETAILED DESCRIPTION OF INVENTION

Metalaxyl, as used for the purpose of the present invention, includes the D-enantiomer, also termed metalyl-M, the L-enantiomer of metalaxyl and mixture of the D-enantiomer and the L-enantiomer including both racemic and non-racemic mixtures. In a particular embodiment, metalaxyl is used in the form of its D-enantiomer.

Essentially dissolved means that the aqueous phase does not contain noticeable amounts of undissolved metalaxyl. The concentration of undissolved metalaxyl does generally not exceed 0.05% by weight (500 ppm), in particular 0.02% by weight (200 ppm), based on the total weight of the aqueous formulation. In particular at least 98% or at least 99% of the metalaxyl present in the aqueous formulation are present in dissolved form, i.e. dissolved in the aqueous phase and less than 5% by weight, in particular less than 2% by weight or less than 1% by weight of metalaxyl, based on the total amount of metalaxyl present in the formulation, is present in solid form.

Melting points, as referred herein, are melting points as determined in accordance with DIN EN ISO 11357-1:2009, by differential scanning calorimetry.

According to the present invention, the aqueous phase of the formulation contains water and at least one surfactant. The surfactant is usually present in dissolved form. The total concentration of the surfactant in the aqueous formulation is generally from 0.5 to 20% by weight, in particular from 1 to 15% by weight, based on the total weight of the formulation.

According to the present invention, the surfactant comprises the at least one salt of an oligomer or polymer having a plurality of arylsulfonategroups. These surfactants are hereinafter termed surfactants S.1. Suitable salts include the alkali metal salts, such as the sodium or potassium salts, the earth-alkaline metal salts, such as the calcium salts, and ammonium (NH₄⁺) and substituted ammonium salts. The term "substituted ammonium" is readily understood as an ammonium salt, wherein 1, 2, 3 or 4 of the N-bound hydrogen atoms of NH₄⁺ are replaced by an organic radical such as C₁-C₄-alkyl, which is unsubstituted or substituted by a hydroxy or C₁-C₄-alkoxy radical, where alkoxy itself may be unsubstituted or substituted by a hydroxy or C₁-C₄-alkoxy radical. Examples of substituted ammonium salts include mono-, di-, tri- and tetramethylammonium, mono-, di-, tri- and tetraethylammonium, 2-hydroxyethylammonium, bis-(2-hydroxyethylammonium), trimethyl-2-hydroxyethylammonium, dimethyl-bis(2-hydroxyethylammonium), 2-ethoxy-2-ethylammonium, 2-(2-hydroxypropyloxy)propylammonium, etc. Preferred salts are the sodium, potassium, calcium and ammonium salts.

According to the invention, said oligomers or polymers are the salts, e.g. the alkali metal salts, such as the sodium or potassium salts, the earth-alkaline metal salts, such as the calcium salts, and ammonium (NH₄⁺) and substituted ammonium salts, in particular the sodium, potassium, calcium and ammonium salts, of naphthalinsulfonic acid formaldehyde condensates, phenolsulfonic acid formaldehyde condensates, naphthalinsulfonic acid urea formaldehyde condensates and phenolsulfonic acid formaldehyde urea condensates, and mixtures thereof. In a preferred embodiment, the oligomer or polymer is an alkaline metal salts or earth alkaline metal salt of a reaction product (condensate) of naphthalene sulfonic acid and formaldehyde; a particularly suitable example is Morwet® D425 (Akzo Nobel). In another preferred embodiment, the oligomer or polymer is an alkaline metal salt or earth alkaline metal salt of a reaction product (condensate) of phenol sulfonic acid, formaldehyde and urea; a particularly suitable example is Wettol® D1 or Vultamol® DN (BASF SE).

The concentration of said surfactants S.1 in the formulation is generally from 0.2 to 10% by weight, in particular from 0.5 to 5% by weight, based on the total weight of the formulation.

In addition to the aforementioned surfactants S.1 the composition may contain one or more further surfactants, which are different from surfactants S.1. Suitable surfactants different from S.1 include anionic surfactants and non-ionic surfactants and combinations thereof. The surfactants different from S.1 include non-polymeric surfactants which are also termed emulsifiers and polymeric surfactants, which may also termed as protective colloids. In contrast to polymeric surfactants, emulsifiers will generally have a number average molecular weight M_{N} of not more than 1000 Dalton while polymeric surfactants will generally have a number average molecular weight M_{N} of greater than 1000 Dalton. The nature of the further surfactants is not particularly critical, e.g. they may be selected from any known dispersing agents and wetting agents. Dispersing agents are those surfactants which primarily bond to the surface of the active ingredient particles/droplets, e.g. by ionic and/or hydrophobic interaction, and which stabilize the particles in the liquid phase. Wetting agents are surfactants which primarily lower the interfacial tension between the liquid phase and the surface of the solid particles of the active ingredient (here, the pesticide compound) that are dispersed or emulsified in the aqueous phase, thereby assisting in stabilizing the particles in the aqueous phase. Wetting agents may be chosen by physical measuring of the contact angle. Particular suitable wetting agents will have a contact angle of less than 90°, in particular less than 60° (determined at 24°C/1013 mbar for a 1 M aqueous solution of the wetting agent according to DIN 53914 by the Wilhelmy method or according to extended Washburn method using a powder of the pesticide compound).

Suitable further surfactants include anionic surfactants, which are different from the aforementioned surfactants S.1 and have at lest one sulphate, sulfonate, phosphate, or phosphonate group. Surfactants of this type include but are not limited to the salts, in particular the sodium, potassium, calcium or ammonium salts of emulsifiers having an SO₃⁻ or PO₃²⁻ group, e.g.
S.2 C₆-C₂₂-alkylsulfonates such as lauryl sulfonate, isotridecylsulfonate;
S.3 C₆-C₂₂-alkylsulfates such as lauryl sulfate, isotridecylsulfate, cetylsulfate, stearylsulfate;
S.4 aryl- and C₁-C₁₆-alkylarylsulfonates such as naphthylsulfonate, mono-,di- and tri-C₁-C₁₆-alkylnaphthylsulfonates such as dibutylnaphtylsulfonate, dodecyldiphenylether sulfonate, mono-, di- and tri-C₁-C₁₆-alkylphenylsulfonates such as cumylsulfonate, octylbenzene sulfoanate, nonylbenzenesulfonate, dodecylbenzene sulfonate and tridecylbenzene sulfonate;
S.5 sulfates and sulfonates of C₆-C₂₂-fatty acids and C₆-C₂₂-fatty acid esters;
S.6 sulfates of ethoxylated C₆-C₂₂ alkanols such as sulfates of (poly)ethoxylated lauryl alcohol;
S.7 alkylphenol ether sulfates, e.g. the sulphates of (poly)ethoxylated C₄-C₁₆-alkylphenols and the sulphates of (poly)ethoxylated-co-propoxylated C₄-C₁₆-alkylphenols;
S.8 polyaryl ether sulfates, e.g. the sulfates of (poly)ethoxylated di- or tristyrylphenols and the sulfates of (poly)ethoxylated-co-propoxylated di- or tristyrylphenols;
S.9 di C₄-C₁₆ alkylesters of sulfosuccinic acid such as dioctylsulfosuccinate;
S.10 phosphates of ethoxylated C₆-C₂₂ alkanols such as phosphates of (poly)ethoxylated lauryl alcohol;
S.11 alkylphenol ether phosphates, e.g. the phosphate esters of (poly)ethoxylated C₄-C₁₆-alkylphenols and the phosphate esters of (poly)ethoxylated-co-propoxylated C₄-C₁₆-alkylphenols;
S.12 polyaryl ether phosphates, e.g. the phosphate esters of (poly)ethoxylated di- or tristyrylphenols and the phosphate esters of (poly)ethoxylated-co-propoxylated di- or tristyrylphenols.

Preferably the further anionic surfactant, if present, is selected from the groups of anionic emulsifiers having a sulfate or sulfonate group, e.g. from surfactants S.4 to S.10, in particular from the groups S.4, S.7, S.8 and S.10 and especially from the group S.8. Likewise preferred are anionic surfactants from the group S.12.

In the group of surfactants S.4 preference is given to mono- or di-C₄-C₈-alkyl-naphthalene sulfonic acid and mono- or di-C₄-C₁₆-alkylbenzesulfonic acid and the ammonium salts, the alkaline metal salts, such as the sodium or potassium salt, and the earth alkaline metal salts, in particular the calcium salts thereof. Particularly suitable examples are Morwet® EFW (Akzo Nobel), and the like.

In the group of surfactants S.7 preference is given to polyethoxylated mono-C₆-C₁₂-alkylphenol sulfates, in particular of those having from 5 to 50, in particular 10 to 40 ethylenoxide repeating units, such as ethoxylated octylphenol sulfates, ethoxylated nonylphenol sulfates and ethoxylated dodecylphenol sulfates, and the ammonium salts, the alkaline metal salts, such as the sodium or potassium salt, and the earth alkaline metal salts, in particular the ammonium and sodium salts thereof.

In the group of surfactants S.8 preference is given to the ammonium salts, alkaline metal salts and earth alkaline metal salts of sulfates of (poly)ethoxylated di- or tristyrylphenols, in particular of those having from 5 to 50, in particular 10 to 50 or 15 to 50 ethylenoxide repeating units. Particularly suitable examples of sulfates of (poly)ethoxylated di- or tristyrylphenols are Soprophor® 4D384 from Rhodia and the like.

In the group of surfactants S.9 preference is given to the ammonium salts and the alkaline metal salts of di(C₆-C₁₂ alkyl) sulfosuccinates, C₆-C₁₂ alkyl being a straight chain or branched alkyl group of from 6 to 12 carbon atoms, e.g. n-hexyl, n-heptyl, n-octyl, n-nonyl, n-decyl, n-dodecyl, 2-hexyl, 2-heptyl, 2-octyl, 2-nonyl and 2-ethyl hexyl. Preferably, an alkaline metal dioctyl sulfosuccinate is employed, wherein the octyl moiety may be linear or branched and wherein the alkaline metal being selected from sodium and potassium. A particularly suitable example is Aerosol® OTB (Cytec), and the like.

In the group of surfactants S.12 preference is given to the ammonium salts and alkaline metal salts of phosphates of (poly)ethoxylated di- or tristyrylphenols, in particular of those having from 5 to 50, in particular 10 to 50 or 15 to 50 ethylene oxide repeating units.

Further surfactants are also non-ionic polymeric surfactants, carboxylate group containing polymeric surfactants and non-ionic emulsifiers, such as
S.13 graft or comb copolymers containing poly-C₂-C₄-alkylene oxide moieties, in particular polyethylene oxide moieties PEO, attached to a polymeric backbone of polymerized ethylenically unsaturated monomers and graft or comb polymers containing a poly-C₂-C₄-alkylene oxide backbone, in particular a polyethyleneoxide backbone, and polymeric side chains of polymerized ethylenically unsaturated monomers;
S.14 copolymers containing, in polymerised form, (i) C₃-C₅ monoethylenically unsaturated carboxylic acid monomers, and (ii) hydrophobic monomers having a water solubility of not more than 60 g/l at 20°C and 1013 mbar.
S.15 non-ionic block copolymers comprising at least one poly(ethylene oxide) moiety PEO and at least one polyether moiety PAO derived from C₃-C₁₀-alkylene oxides and/or styrene oxide, in particular polyoxyethylene-polyoxypropylene-blockcopolymers;
S.16 polyethyleneglycol-C₁-C₂₂-alkylethers, polyethyleneglycol/polypropyleneglycol-C₁-C₂₂-alkylethers, in particular polyethoxylates and poly-ethoxylates-co-propoxylates of linear or branched C₈-C₂₀-alkanoles, more preferably polyethoxylated C₈-C₂₂-fatty alcohols and polyethoxylated C₈-C₂₂-oxoalcohols, such as polyethoxylated lauryl alcohol, polyethoxylated isotridecanol, polyethoxylated cetyl alcohol, polyethoxylated stearyl alcohol, poly-ethoxylates-co-propoxylates of laurylalcohol, poly-ethoxylates-co-propoxylates of cetylalcohol, poly-ethoxylates-co-propoxylates of isotridecylalcohol, poly-ethoxylates-co-propoxylates of stearylalcohol, and esters thereof, such as acetates;
S.17 polyethylenglycol arylethers and polyethyleneglycol/polypropyleneglycol arylethers, in particular polyethoxylates and poly-ethoxylates-co-propoxylates of mono- or di-C₁-C₁₆-alkylphenoles, such as polyethoxylates and poly-ethoxylates-co-propoxylates of nonylphenol, decylphenol, isodecylphenol, dodecylphenol or isotridecylphenol, and esters thereof, such as acetates;
S.18 C₆-C₂₂-alkylglucosides and C₆-C₂₂-alkyl polyglucosides;
S.19 partial esters of polyols with C₆-C₂₂-alkanoic acids, in particular mono- and diesters of glycerine and mono-, di- and triesters of sorbitan, such as glycerine monostearate, sorbitanmonooleat, sorbitantristearat;
S.20 polyethoxylates of C₆-C₂₂-alkylglucosides and polyethoxylates of C₆-C₂₂-alkyl polyglucosides;
S.21 polyethoxylates and poly-ethoxylates-co-propoxylates of C₆-C₂₂-fatty amines;
S.22 polyethoxylates and poly-ethoxylates-co-propoxylates of C₆-C₂₂-fatty acids and polyethoxylates and poly-ethoxylates-co-propoxylates of hydroxyl C₆-C₂₂-fatty acids;
S.23 polyethoxylates of partial esters of polyols with C₆-C₂₂-alkanoic acids, in particular polyethoxylates of mono- and diesters of glycerine and polyethoxylates of mono-, di- and triesters of sorbitan, such as polyethoxylates of glycerine monostearate, polyethoxylates of sorbitanmonooleat, polyethoxylates of sorbitanmonostearat and polyethoxylates of sorbitantristearat;
S.24 polyethoxylates of vegetable oils or animal fats such as corn oil ethoxylate, castor oil ethoxylate, tallow oil ethoxylate;
S.25 polyethoxylates of fatty amines, fatty amides or of fatty acid diethanolamides;
S.26 polyethoxylates and poly-ethoxylates-co-propoxylates of mono-, di- und tristyrylphenols; and the esters thereof, e.g. the acetates.

The terms polyethyleneglycol, polyethoxylates and polyethoxylated refer to polyether radicals derived from ethyleneoxide. Likewise, the term poly-ethoxylate-co-propoxylate refers to a polyether radical derived from a mixture of ethyleneoxide and propylenoxide. Thus polyethoxylates have repeating units of the formula [CH₂CH₂O] while poly-ethoxylate-co-propoxylate have repeating units of the formulae [CH₂CH₂O] and [CH(CH₃)CH₂O]. The non-ionic surfactants S.16, S.17 and S.20 to S.26 may belong to the group of non-polymeric surfactants (emulsifiers) or to the group of polymeric surfactants, depending on the number of alkylene oxide repeating units. In the surfactants of these groups, the number of such repeating units will generally range from 2 to 200, in particular from 3 to 100, especially from 3 to 50. The surfactants of the groups S.18 and S.19 belong to non-ionic emulsifiers.

Amongst further surfactants those of the groups S.13, S.15 and S.26 and mixtures thereof are preferred.

According to a preferred embodiment graft or comb copolymers of the group S.13 preferably contain, in polymerised form,
(i) at least one monomer having an oligo- or poly-C₂-C₄-alkylene oxide group, in particular an oligo- or polyethylenoxide group which is attached either via ester linkages or ether linkages to a polymerizable ethylenically unsaturated double bond, in particular an ester of an oligo- or poly-C₂-C₄-alkylene oxide, especially an ester of an oligo- or polyethylenoxide with a C₃-C₅ monoethylenically unsaturated carboxylic acid monomer, such as acrylic acid or methacrylic, or an ester of an oligo- or poly-C₂-C₄-alkylene oxide mono-C₁-C₄-alkylether, especially an ester of an oligo- or polyethylenoxide mono-C₁-C₄-alkylether with a C₃-C₅ monoethylenically unsaturated carboxylic acid monomer, such as acrylic acid or methacrylic acid,
(ii) at least one non-ionic monomer having a water solubility of at least 10 g/l at 20°C and 1013 mbar, e.g. C₁-C₃-alkyl esters or hydroxy-C₂-C₄-alkyl esters of C₃-C₅ monoethylenically unsaturated carboxylic acid monomers, such as methyl acrylate, methyl methacrylate, 2-hydroxyethyl acrylate, 2- or 3-hydroxylpropyl acrylate, 2-hydroxyethyl methacrylate and 2- or 3-hydroxypropyl methacrylate.
(iii) optionally a C₃-C₅ monoethylenically unsaturated carboxylic acid monomer, such as acrylic acid, methacrylic acid or maleic acid.

According to another preferred embodiment graft or comb copolymers of the group S.13 preferably contain poly-C₂-C₄-alkylene oxide group, in particular a polyethyleneoxide group as a polymer back bone and polymeric side chains of polymerised monomers selected form vinyl esters of C₂-C₁₀-alkanoic acid, in particular from vinyl esters of C₂-C₆-alkanoic acid such as vinyl acetate, vinyl propionate, vinyl butyrate, vinyl valerate or vinylhexanoate.

The weight-average molecular weight of the graft or comb copolymers of group S.13 is preferably in the range from 5000 to 800000 g/mol, in particular from 7500 to 600000 g/mol, especially from 10000 to 400000 g/mol. The graft or comb copolymers of group S.13 are preferably not crosslinked. In a particular embodiment of the surfactants S.13, the graft or comb polymer contains or consists of, in polymerized form, methyl methacrylate and an ester of polyethylene oxide monomethylether with methacrylic acid, and optionally methacrylic acid, such as in the copolymer having CAS-No. 1000934-04-1 which is commercially available as Tersperse® 2500 or in the copolymer having CAS-No. 119724-54-8 which is commercially available as Atlox® 4913. In another particular embodiment of the surfactants S.13, the graft or comb polymer contains a backbone of polyethylene oxide, to which polymeric side chains of polymerised units of one or more C₂-C₆-alkanoic acids, in particular polymerized units of vinyl acetate are bound. These polymers have been described in WO 2007/138053, in particular page 5 line 14 to page 10 line 25, and in WO 2011/110481 as polymeric additives. To both WO 2007/138053 and WO 2011/110481 full reference is made.

Preferred polymeric surfactants of the group S.14 are those which contain, in polymerized form (i) at least one C₃-C₅ monoethylenically unsaturated carboxylic acid monomer, and (ii) at least one hydrophobic monomer, having preferably a water solubility of at most 30 g/l. Suitable C₃-C₅ monoethylenically unsaturated carboxylic acid monomers are in particular acrylic acid, methacrylic acid, maleic acid, fumaric acid and itaconic acid. Preferred hydrophobic are selected from vinylaromatic monomers such as styrene monomers and C₂-C₁₂-monolefines. Preferably, the polymeric surfactants S.14 contain, in polymerised form, (i) at least one C₃-C₅ monoethylenically unsaturated carboxylic acid monomer, in particular acrylic acid or methacrylic acid, and (ii) at least one hydrophobic monomer selected from styrene monomers and C₂-C₁₂-monolefines. The weight ratio from acid monomer to hydrophobic monomer is preferably in the range of from 10:1 to 1:3 ; preferably from 5:1 to 1:2. A particularly suitable example for surfactants S.14 is Atlox® Metasperse 500L (Uniqema), and the like.

The non-ionic block copolymers of the surfactant class S.15 comprise at least one poly(ethylene oxide) moiety PEO and at least one hydrophobic polyether moiety PAO, which is generally derived from one or more C₃-C₁₀ alkylene oxides. The PAO moiety usually comprises at least 3, preferably at least 5, in particular 10 to 100 repeating units (number average) which are derived from one or more C₃-C₁₀ alkylene oxides, such as propylene oxide, 1,2-butylene oxide, cis- or trans-2,3-butylene oxide or isobutylene oxide, 1,2-pentene oxide, 1,2-hexene oxide, 1,2-decene oxide and styrene oxide, among which C₃-C₄ alkylene oxides are preferred. Preferably, the PAO moieties comprise at least 50% by weight, and more preferably at least 80% by weight of repeating units derived from propylene oxide. The PEO moieties usually comprise at least 3, preferably at least 5, and more preferably at least 10 repeating units derived from ethylene oxide (number average). The weight ratio of PEO moieties and PAO moieties (PEO:PAO) usually ranges from 1:10 to 10:1, preferably from 1:10 to 2:1, more preferably from 2:8 to 7:3 and in particular from 3:7 to 6:4. Those surfactants c25) are preferred which have a number average molecular weight M_{N} ranging from more than 1200 to 100000 Dalton, preferably from 2000 to 60000 Dalton, more preferably from 2500 to 50000 Dalton and in particular from 3000 to 20000 Dalton. In general, the PEO moieties and the PAO moieties make up at least 80% by weight, and preferably at least 90% by weight, e.g. 90 to 99.5% by weight, of the non-ionic block copolymer surfactants c25). Suitable surfactants c25) are described e.g. in WO2006/002984, in particular those having the formulae P1 to P5 given therein.

The non-ionic block copolymer surfactants of the group S.15 described herein are commercially available e.g. under the trade names Pluronic®, such as Pluronic® P 65, P84, P 103, P 105, P 123, Pluronic PE 3500, PE 4300, PE 4400, PE 6200, PE 6400, PE 6800, PE 9200, PE 9400, PE 10300, PE 10400, PE 10500 and Pluronic® L 31, L 43, L 62, L 62 LF, L 64, L 81, L 92 and L 121 (BASF SE); Pluraflo® such as Pluraflo® L 860, L1030 and L 1060 (BASF SE); Tetronic®, such as Tetronic® 704, 709, 1104, 1304, 702, 1102, 1302, 701, 901, 1101, 1301 (BASF SE); Agrilan® AEC 167 and Agrilan® AEC 178 (Akcros Chemicals); Antarox® B/848 (Rhodia); Berol® 370 and Berol® 374 (Akzo Nobel Surface Chemistry); Dowfax® 50 C15, 63 N10, 63 N30, 64 N40 and 81 N10 (Dow Europe); Genapol® PF (Clariant); Monolan®, such as Monolan® PB, Monolan® PC, Monolan® PK (Akcros Chemicals); Panox® PE (Pan Asian Chemical Corporation); Symperonic®, such as Symperonic® PE/L, Symperonic® PE/F, Symperonic® PE/P, Symperonic® PE/T (ICI Surfactants); Tergitol® XD, Tergitol® XH and Tergitol® XJ (Union Carbide); Triton® CF-32 (Union Carbide); Teric PE Series (Huntsman); and Witconol®, such as Witconol® APEB, Witconol® NS 500 K (Akzo Nobel Surface Chemistry) and the like. Among these, the Pluronic® and the Pluraflo® block copolymers are preferred, particularly suitable examples being Pluronic® P105 and Pluraflo® 1060, and the like. Particular preference is also given to mono-C₁-C₁₀ alkylether of polyethylenoxid-polypropylenoxid-Blockpolmers having a number average molecular weight M_{N} of from 1000 to 10000 Dalton. Particularly suitable examples include Atlox® G 5000 (Uniqema), Tergitol®XD and the like.

In the group of surfactants S.16 preference is given to polyethoxylates and poly(ethoxylate-co-propoxylates) of linear C₈-C₂₂ alkanols. Likewise preferred are poly(ethoxylate-co-propoxylates) of C₁-C₁₀ alkanols, with particular preference given to butanol. Amongst the surfactants c.14 those are preferred which have a number average molecular weight M_{N} of not more than 5000 Dalton. Amongst the surfactants S.15 those are preferred which have a number average molecular weight M_{N} of not more than 5000 Dalton. Particular preference is given to poly(ethoxylate-co-propoxylates) of C₁-C₁₀ alkanols, having a number average molecular weight M_{N} of from 500 to 5000 Dalton Particularly suitable examples include Atlox® G 5000 (Akzo Nobel), Tergitol®XD and the like.

In the surfactants of the group S.26 a phenoxy radical carries 1, 2 or 3 styryl moieties and a polyethylene oxide moiety PEO or a poly(ethylenoxide-co-propylenoxide) moiety PEO/PPO. The PEO moiety typically comprises from 5 to 50 ethylene oxide groups. Preferred surfactants c.24 may be represented by the formula (C₂H₄O)ₙ•C₃₀H₃₀O, wherein n is an integer of from 5 to 50 and C₃₀H₃₀O represents a tri(styryl) phenol group. A particularly suitable example is Soprophor® BSU (Rhodia).

Amongst further surfactants from groups S.13 to S.26 those of the groups S.13, S.15 and S.26 and mixtures thereof are preferred.

In particular the one or more further surfactant is selected from the surfactants of groups S.4 to S.10, S12, S.13, S.15 and S.26, in particular from the groups S.4, S.7, S.8, S.10, S.12, S.13, S.15 and S.26 and especially from the group S.8, S.12, S.13, S.15 and S.26, including mixtures thereof.

The total concentration of said further surfactants in the formulation, if present, is generally from 0.3 to 19.8% by weight, in particular from 0.5 to 14.5% by weight, based on the total weight of the formulation.

The concentration of metalaxyl in the formulation is generally at least 0.2% by weight and preferably at least 0.3% by weight and in particular at least 0.5% by weight, based on the total weight of the formulation. The concentration will generally not exceed 5% by weight, and is preferably from 0.2 to 5% by weight, in particular from 0.3 to 3% by weight, especially from 0.5 to 2% by weight, based on the total weight of the formulation.

The formulation contains at least one low melting organic pesticide compound PC1 which is sparingly soluble in water. Suitable pesticide compounds PC are in particular those, which have a solubility in water of at most 1 g/l at 20°C, in particular at most 0.5 g/l at 20°C, and a melting point in the range from 40 to 100°C, in particular in the range from 50 to 95°C.

Examples of suitable pesticide compounds PC1 include, but are not limited to pyraclostrobin, imazalil, dodemorph acetate, pyrimethanil, difenoconazole, ipconazole, trifloxystrobin, fenoxanil, carboxin, metrafenone and acetamiprid. The pesticide compounds PC1, their preparation and their activity e. g. against harmful fungi is known (cf.: http://www.alanwood.net/pesticides/); all of these substances are commercially available.

In a particular preferred embodiment of the invention, the pesticide compound PC1 is pyraclostrobin.

The concentration of the further pesticide PC1 is preferably from 0.2 to 15% by weight, in particular from 0.5 to 10% by weight, based on the total weight of the formulation. The weight ratio of the further pesticide compound PC1 to metalaxyl is preferably from 0.1:1 to 25:1, in particular from 0.2:1 to 5:1 and especially from 0.3:1 to 2:1.

As the pesticide compound PC1 is sparingly water-soluble, it is present in the formulation in the form of suspended particles. The weight average particle diameter of the pesticide compound PC1, as determined by light scattering, is preferably in the range from 0.5 to 10 µm, in particular from 1 to 5 µm. Preferably the D₉₀ value of the particle size distribution of suspension of the pesticide compound PC1 is below 10 µm. The particle size distribution of the pesticide PC1in the aqueous composition can be determined by quasi-elastic light scattering of an aqueous dilution composition at 20°C. Quasi-elastic light scattering of the highly diluted compositions may be performed in accordance with the methods described in CIPAC MT 187 or ISO 13320-1:1999. Dilution depends on light obscuration values achieved at certain particle concentration level to produce acceptable signal to noise ratio and the required dilution rate can be assessed by routine experiments.

The formulation of the present invention may contain one or more further pesticides PC2. The pesticide PC2 should fulfil at least one of the following requirements. The further pesticide PC2 is
i) soluble in water, i.e. its solubility is sufficient to achieve complete dissolution at 20°C; and/or
ii) it has a melting point of above 100°C, in particular at least 110°C.

In the formulation of the present invention, the concentration of the further pesticide compound PC2, if present, is generally from 0.1 to 25% by weight, preferably from 0.2 to 15% by weight, in particular from 1 to 10% by weight, based on the total weight of the final formulation. The weight ratio of the further pesticide compound PC2 to metalaxyl is generally from 0.1:1 to 25:1, preferably from 0.2:1 to 5:1, in particular from 0.3:1 to 2:1.

Preferably, the further pesticide PC2 is included in the composition provided in steps a) or b), i.e. prior to step c) of the process of the present invention. However, the PC2 may also be included afterwards.

In a particular embodiment of the invention, the further pesticide PC2 is only sparingly soluble in water, i.e. its solubility in water is at most 5 g/L, in particular at most 1 g/L, especially at most 0.5 g/L at 20°C in deionized water.

Suitable pesticides PC2 are e.g. triticonazole, fluxapyroxad, boscalid, metconazole, dimethomorph, prochloraz, thiophanate-methyl, iprodione, epoxiconazole, fenpropimorph, chlorothalonil, fludioxonil, prothioconazole, tebuconazole, propiconazole, thiram, metiram, dithianon, mancozeb, dimoxystrobine, ametoctradin, fipronil, rynaxypyr, thiametoxam, clothianidin, thiacloprid, imidacloprid and dinotefuran, with particular preference given to triticonazole, fluxapyroxad, dimethomorph and boscalid. Likewise Suitable pesticides PC2 are the triazol fungicide compounds selected from the group consisting of 2-[2-chloro-4-(4-chlorophenoxy)phenyl]-1-(1,2,4-triazol-1-yl)pent-3-yn-2-ol, 2-[4-(4-chlorophenoxy)-2-(trifluoromethyl)phenyl]-1-(1,2,4-triazol-1-yl)propan-2-ol and 2-[4-(4-chlorophenoxy)-2-(trifluoromethyl)phenyl]-3-methyl-1-(1,2,4-triazol-1-yl)butan-2-ol and mixtures thereof.

The pesticides PC2, their preparation and their activity e. g. against harmful fungi is known (cf.: http://www.alanwood.net/pesticides/); most of these substances are commercially available. The compound 2-[2-chloro-4-(4-chlorophenoxy)phenyl]-1-(1,2,4-triazol-1-yl)pent-3-yn-2-ol is known from 2013-010862 and can be prepared by the methods described therein. The compounds 2-[4-(4-chlorophenoxy)-2-(trifluoromethyl)phenyl]-1-(1,2,4-triazol-1-yl)propan-2-ol and 2-[4-(4-chlorophenoxy)-2-(trifluoromethyl)phenyl]-3-methyl-1-(1,2,4-triazol-1-yl)butan-2-ol are known from WO 2013/007767 and can be prepared by the methods described therein.

In a particular embodiment of the invention, the further pesticide PC2 is triticonazol.

In another particular embodiment of the invention, the further pesticide PC2 is boscalid.

In a further particular embodiment of the invention, the further pesticide PC2 is fluxapyroxad.

In a further particular embodiment of the invention, the further pesticide PC2 is dimethomorph

In a very particular preferred embodiment the pesticide PC1 is pyraclostrobin and the pesticide PC2 is selected from the group consisting of triticonazol, boscalid, dimethomorph and fluxapyroxad.

In another particular preferred embodiment the pesticide PC1 is pyraclostrobin and the pesticide PC2 is selected from the group consisting of 2-[2-chloro-4-(4-chlorophenoxy)phenyl]-1-(1,2,4-triazol-1-yl)pent-3-yn-2-ol, 2-[4-(4-chlorophenoxy)-2-(trifluoromethyl)phenyl]-1-(1,2,4-triazol-1-yl)propan-2-ol and 2-[4-(4-chlorophenoxy)-2-(trifluoromethyl)phenyl]-3-methyl-1-(1,2,4-triazol-1-yl)butan-2-ol and mixtures thereof.

In yet a further embodiment the pesticide PC1 is selected from the group consisting of imazalil, pyrimethanil, fenoxanil, metrafenone and dodemorph-acetate and the pesticide PC2 is 2-[2-chloro-4-(4-chlorophenoxy)phenyl]-1-(1,2,4-triazol-1-yl)pent-3-yn-2-ol.

In yet a further embodiment the pesticide PC1 is selected from the group consisting of imazalil, pyrimethanil, fenoxanil, metrafenone and dodemorph-acetate and the pesticide PC2 is 2-[4-(4-chlorophenoxy)-2-(trifluoromethyl)phenyl]-1-(1,2,4-triazol-1-yl)propan-2-ol.

In yet a further embodiment the pesticide PC1 is selected from the group consisting of imazalil, pyrimethanil, fenoxanil, metrafenone and dodemorph-acetate and the pesticide PC2 is 2-[4-(4-chlorophenoxy)-2-(trifluoromethyl)phenyl]-3-methyl-1-(1,2,4-triazol-1-yl)butan-2-ol.

If the pesticide compound PC2 is sparingly water-soluble, both pesticides PC1 and PC2 will present in the formulation in the form of suspended particles. Then, the weight average particle diameter of the pesticide compound PC1 and PC2, as determined by light scattering, is preferably in the range from 0.5 to 10 µm, in particular from 1 to 5 µm. Preferably, the D₉₀ value of the particle size distribution is below 10 µm, i.e. at least 90% by weight of the particles of the pesticide compound PC1 and PC2 have a particle size below 10 µm. The particle size distribution of the pesticides PC1 and PC2 in the aqueous composition can be determined by quasi-elastic light scattering of an aqueous dilution composition at 20°C. Quasi-elastic light scattering of the highly diluted compositions may be performed in accordance with the methods described in CIPAC MT 187 or ISO 13320-1:1999. Dilution depends on light obscuration values achieved at certain particle concentration level to produce acceptable signal to noise ratio and the required dilution rate can be assessed by routine experiments.

In the formulation of the present invention the amount of water is generally at least 50% by weight, in particular at least 70% by weight, based on the total weight of the formulation. It is clear to a skilled person that the amount of water will depend on the amount of other ingredients contained in the formulation and that the relative amounts of all ingredients will add up to a total of 100% by weight.

In addition to water and surfactant, the aqueous phase of the formulation may contain one or more aliphatic alcohols which have at least one OH group, in particular an aliphatic polyol, i.e. an aliphatic alcohol having at least 2 OH groups, e.g. 2, 3 or 4 OH groups. Preferred aliphatic alcohols are liquid at 20°C. Preferred aliphatic alcohols are completely miscible with water at 20°C or at least soluble in water in an amount of at least 300 g/l. Suitable aliphatic alcohols include C₁-C₄-alkanols, such as methanol, ethanol, n-propanol, i-propanol, n-butanol, tert.-butanol or 2-butanol, aliphatic polyols having preferably 2, 3 or 4 OH groups, and having preferably from 2 to 6 carbon atoms, such as ethylene glycol, propylene glycol, glycerol, diethylene glycol, triethylene glycol, dipropylene glycol, butylene glycol, pentylene glycol or hexylene glycol. In a particular preferred embodiment, the aliphatic alcohol is glycerol or propylene glycol. The concentration of the aliphatic alcohol in the formulation of the present invention is generally from 1 to 30% by weight, in particular from 2 to 20% by weight, based on the total weight of the aqueous formulation. Preferably, the aliphatic alcohol is included in the composition provided in steps a) or b), i.e. prior to step c) of the process of the present invention. However, the aliphatic alcohol may also be included afterwards.

The formulation of the invention may contain one or more additives including additives affecting the flow behaviour, defoamers, colorants and/or biocides.

In particular the formulation contains an additive which affects the flow behavior of the formulation. Such additives are also termed thickeners. Thickeners may also assist in stabilizing the final formulation against caking. Mention may be made, in this connection, for example, of commercial thickeners based on polysaccharides, such as methylcellulose, carboxymethylcellulose, hydroxypropylcellulose (Klucel® grades), Xanthan Gum (commercially available e.g. as Kelzan® grades from Kelco or Rhodopol® grades from Rhodia), synthetic polymers such as acrylic acid polymers (Carbopol® grades), polyvinyl alcohol (e.g. Mowiol® and Poval® grades from Kuraray) or polyvinyl pyrrolidones, silicic acid or phyllosilicates such as montmorillonites, attapulgites and bentonites, which may be hydrophobized, (commercially available as Attaclay® grades and Attaflow® grades from BASF SE; or as Veegum® grades and Van Gel® grades from R.T. Vanderbilt). Polysaccharide based thickeners and especially Xanthan Gum are preferred thickeners. The concentration of thickeners in the formulation will generally not exceed 2% by weight, based on the total weight of the formulation, and is preferably in the range from 0.01 to 5% by weight, in particular from 0.02 to 3% by weight and especially from 0.05 to 2% by weight, based on the total weight of the formulation. Preferably, a thickener and especially a polysaccharide based thickener is included in the composition provided in steps a) or b), i.e. prior to step c) of the process of the present invention. However, the thickener may also be included afterwards.

Antifoam agents, also termed defoamers, may be included into the composition of step a) or b) or added to the final formulation. Examples of suitable antifoam agents include e.g. silicone emulsions (such as, for example, Drewplus® grades Silikon® SRE, Wacker or Rhodorsil® from Rhodia), long-chain alcohols, fatty acids, organofluorine compounds and mixtures thereof. Generally, defoamers are used in such amounts that a concentration in the range from 0.01 to 1% by weight, in particular from 0.02 to 0.5% by weight, based on the total weight of the final formulation, will result.

Biocides can be added to stabilize the formulation against attack by microorganisms. Suitable biocides are, for example, based on isothiazolones such as the compounds marketed under the trademarks Mergal® K10, Proxel® grades from Avecia (or Arch) or Acticide® grades such as Acticide® MBS or Acticide® RS from Thor Chemie and Kathon® grades such as Kathon® MK from Rohm & Haas. Generally, biocides may be included into the composition of step a) or b) or added to the final formulation. Generally, biocides are used in such amounts that a concentration in the range from 0.01 to 1% by weight, in particular from 0.02 to 0.5% by weight, based on the total weight of the final formulation, will result.

The formulation of the invention may optionally comprise also coloring agents such as pigments or dyes, in particular, if the composition is intended for seed treatment purposes. Suitable pigments or dyes for seed treatment formulations are pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. Generally, colorants may be included into the composition of step a) or b) or added to the final formulation. Generally, colorants are used in such amounts that a concentration in the range from 1 to 15% by weight, in particular from 5 to 10% by weight, based on the total weight of the final formulation, will result.

In step a) of the process of the present invention, an aqueous suspension of metalaxyl is provided, which contains at least one surfactant S.1 and optionally one or more further surfactants as defined above.

In step b) the suspension is treated, until the metalaxyl contained therein, is essentially present dissolved in the aqueous phase. The concentration of metalaxyl in the suspension of step a) and in the aqueous phase of the composition obtained in step b), is generally from 0.3 to 10%, in particular 0.5 to 5%, especially 0.8 to 3% by weight, based on the total weight of the aqueous suspension of step a) or of the composition provided in step b), respectively.

The suspension of step a) may contain at least one further pesticide PC2 as defined above. In this case, the concentration of further pesticide PC2 in the aqueous suspension and thus in the composition of step b) is generally from 0.2 to 30% by weight, in particular from 0.5 to 20% by weight and especially from 1 to 15% by weight, based on the total weight of composition used in step a). In particular the weight ratio of metalaxyl to the further organic pesticide compound PC2 is from 0.1 to 25:1, more particularly from 0.2:1 to 5:1 and especially from 0.3:1 to 1:2.

Essentially dissolved means that the aqueous phase obtained in step b) does not contain noticeable amounts of undissolved metalaxyl. The concentration of undissolved metalaxyl does generally not exceed 0.05% by weight (500 ppm), in particular 0.02% by weight (200 ppm), based on the total weight of the aqueous composition. In particular at least 99% of the metalaxyl present in the aqueous suspension of step a) are present in dissolved form.

Preferably at least 50%, in particular at least 80% of the surfactant S.1 contained in the final formulation is included in the suspension of step a) or in the composition provided in step b). Generally the one or more further surfactants, which are optionally contained in the formulation are at least partly included in the in the suspension of step a) or in the composition provided in step b). Preferably at least 50%, in particular at least 80% of the further surfactant optionally contained in the final formulation is included in the suspension of step a) or in the composition provided in step b). In the suspension of step a) and the composition of step b), the surfactant is usually present in dissolved form. The total concentration of the surfactant in the aqueous suspension of step a) or in the composition of step b) is generally from 0.5 to 20% by weight, in particular from 1 to 10% by weight, based on the total weight of the suspension of step a) or of the composition of step b), respectively.

If the formulation contains an aliphatic alcohol as described above, the aliphatic alcohol is preferably added to the aqueous suspension of step a), because it assists dissolution of metalaxyl. The concentration of the aliphatic alcohol in the aqueous suspension is generally from 1 to 30% by weight, in particular from 5 to 20% by weight, based on the total weight of the aqueous suspension provided in step a).

In step b) of the process of the invention, an aqueous composition of metalaxyl, in particular of metalaxyl M is provided, wherein metalaxyl is present in essentially dissolved form. According to the invention, the composition is provided by treating an aqueous suspension of metalaxyl which, besides water, contains at least one surfactant S.1, until metalaxyl is essentially dissolved. Treating may include prolonged stirring or heating or combinations of these measures.

Preferably, the temperature of treatment of step b) will be in the range from 10 to 50°C, in particular from 15 to 40°C. The time required for essentially complete dissolution of metalaxyl can be determined by routine experiments, e.g. by determining the concentration of metalaxyl in the serum. Generally times from 10 min to 5 h, in particular from 30 min to 3 h are required to achieve essentially complete dissolution

The aqueous suspension of step a) can be prepared by standard procedures, e.g. by mixing an aqueous solution of the one or more surfactants S.1 and optionally one or more further surfactants, with a conventional aqueous suspension containing metalaxyl. The aqueous suspension of step a) can also be prepared by adding the one or more surfactants S.1 and optionally one or more further surfactants to a conventional aqueous suspension containing metalaxyl. To the suspension one or more aliphatic alcohols may be added. The alcohols may also be added afterwards to the solution. Said conventional aqueous suspension may further contain one or more pesticides PC2 as defined above. Said conventional aqueous suspension may contain one or more surfactants as defined above.

In step c), the composition obtained in step b) is then mixed with a suspension of the organic pesticide compound PC1 or with a suspension of the organic pesticide compound PC1 and the organic pesticide compound PC2.

In the suspension of the organic pesticide PC1 the concentration of the organic pesticide PC1 is usually from 1 to 50% by weight, in particular from 2 to 40% by weight, especially from 5 to 20% by weight, based on the weight of the suspension. The suspension of the organic pesticide PC1 may additionally contain one or more pesticide compounds PC2 as defined above. Then, the concentration of the organic pesticide PC1 is usually from 1 to 40% by weight, in particular from 2 to 35% by weight, especially from 5 to 15% by weight, based on the weight of the suspension, while the concentration of the organic pesticide PC2 is usually from 1 to 40% by weight, in particular from 2 to 35 % by weight, especially from 5 to 15 % by weight, based on the weight of the suspension. The total concentration of pesticide compounds PC1 and PC2 is then usually from 1 to 50% by weight, in particular from 2 to 40% by weight, especially from 5 to 20% by weight, based on the weight of the suspension.

Principally, any aqueous suspension of the pesticide compound PC1 can be used. Such a suspension may optionally contain one or more surfactants as mentioned above, in particular from the group of surfactants S.1, S.4, S.7, S.8, S.9, S.10, S.11, S.12, S.13, S.15 and S26, in particular at least one anionic surfactant having at least one sulphate, sulfonate, phosphate or phosphonate group, e.g. an anionic surfactant from groups surfactants S.1, S.4, S.7, S.8, S.9, S.10, S.11, S.12 or S.13, in particular from groups S.1, S.8 or S.18, optionally in combination with at least one further surfactant as defined above and which is in particular selected from the groups S.13 to S.26, in particular from groups S.13, S.15 and S.26.

The concentration of surfactants in the suspension of the pesticide compounds PC1 is e.g. from 1 to 50% by weight, in particular from 2 to 30% by weight, based on the weight of pesticide PC1 contained in the suspension, or from 0.2 to 20% by weight, in particular from 0.5 to 10% by weight based on the suspension of the pesticide compound PC1. If the suspension of the pesticide compounds PC1 also contains the pesticide compound PC2, the concentration of surfactants in the suspension of the pesticide compounds PC1 and PC2, is e.g. from 1 to 50% by weight, in particular from 2 to 30% by weight, based on the total weight of pesticide compounds PC contained in the suspension, or from 0.3 to 30% by weight, in particular from 0.7 to 15% by weight based on the suspension of the pesticide compound PC1.

As the pesticide compound PC1 is sparingly water-soluble, it is present in the aqueous suspension in the form of suspended particles. The weight average particle diameter of the pesticide compound PC1, as determined by light scattering, is preferably in the range from 0.5 to 10 µm, in particular from 1 to 5 µm. Preferably the D₉₀ value of the particle size distribution of suspension of the pesticide compound PC1 is below 10 µm. The particle size distribution of the pesticide PC1 in the aqueous composition can be determined by quasi-elastic light scattering of an aqueous dilution of the composition at 20°C by one of the methods described above.

Suitable suspensions of such pesticides PC1 are commercially available and have been described in prior art, e.g. in WO2011/006896, or they may be prepared by the process described in WO2011/006896, to which full reference is made.

Mixing of the aqueous suspension of the organic pesticide compound PC1 with the aqueous composition of metalaxyl obtained in step b) can be achieved by conventional methods of mixing aqueous suspensions or aqueous solutions. Generally, the mixing is performed in a suitable mixing device, e.g. a stirred-tank mixer or by using a dissolver. Mixing is generally performed at temperature in the range from 5 to 40°C, in particular from 10 to 30°C. Preferably, mixing of the suspension and the aqueous composition of step a) is performed at a temperature below the melting point of the pesticide compound PC1, in particular at a temperature, which is at least 15 K, especially at least 20 K below the melting point of the pesticide compound PC1.

The relative amounts of the suspension of PC1 and the composition of metalaxyl prepared in step b) are generally chosen such the desired ratio of metalaxyl to pesticide compound PC1 is achieved. Preferably, the aqueous suspension of the organic pesticide compound PC1 is used in such an amount that the weight ratio of metalaxyl to the further organic pesticide compound PC1 is generally from 0:1 to 25:1 preferably from 0.2:1 to 5:1, in particular from 0.3:1 to 2:1.

The formulations of the invention are particularly useful for combating harmful fungi. Depending on the further pesticide PC1 and the optionally present further pesticide PC2 a large number of harmful fungi may be controlled. Depending on the type of pesticide compound PC1 or PC2, the formulation may also be suitable for controlling insect pest. The formulations obtained by the process of the present invention may be used as such or they may be diluted with water to the desired application rate, which depends on the desired purpose and the further pesticide PC1 and the optionally present further pesticide PC2. The formulations of the present invention are particularly useful for seed treatment applications.

It was also found that the following pesticide combinations A provide superior control of harmful fungi, namely the pesticide combinations, comprising or consisting of:
i) a first pesticide PC1', which is selected from the group consisting of 2-[2-chloro-4-(4-chlorophenoxy)phenyl]-1-(1,2,4-triazol-1-yl)pent-3-yn-2-ol (hereinafter termed compound PC1'.1),
   2-[4-(4-chlorophenoxy)-2-(trifluoromethyl)phenyl]-1-(1,2,4-triazol-1-yl)propan-2-ol (hereinafter termed compound PC1'.2),
   and 2-[4-(4-chlorophenoxy)-2-(trifluoromethyl)phenyl]-3-methyl-1-(1,2,4-triazol-1-yl)butan-2-ol (hereinafter termed compound PC1'.3),
   and mixtures thereof; and
ii) a second pesticide PC2', which is selected from the group consisting of dodemorph acetate and fenoxanil.

Therefore, the present invention also relates to pesticide combinations A and to their use for controlling harmful fungi. Particular examples of pesticide combinations A include the following combinations A.1 to A.6:

| # | PC1' | PC2' |
|---|---|---|
| A.1 | PC1'.1 | dodemorph acetate |
| A.2 | PC1'.2 | dodemorph acetate |
| A.3 | PC1'.3 | dodemorph acetate |
| A.4 | PC1'.1 | fenoxalil |
| A.5 | PC1'.2 | fenoxalil |
| A.6 | PC1'.3 | fenoxalil |

It was also found that the following pesticide combinations B provide superior control of harmful fungi, namely the pesticide combinations, comprising,
i) a first pesticide PC1', which is selected from the group consisting of 2-[2-chloro-4-(4-chlorophenoxy)phenyl]-1-(1,2,4-triazol-1-yl)pent-3-yn-2-ol, 2-[4-(4-chlorophenoxy)-2-(trifluoromethyl)phenyl]-1-(1,2,4-triazol-1-yl)propan-2-ol and 2-[4-(4-chlorophenoxy)-2-(trifluoromethyl)phenyl]-3-methyl-1-(1,2,4-triazol-1-yl)butan-2-ol and mixtures thereof;
ii) a second pesticide PC2', which is selected from the group consisting of dodemorph acetate, fenoxanil, imazalil, pyrimethanil and metrafenone,
iii) and metalaxyl as a third pesticide.

Therefore, the present invention also relates to pesticide combinations B and to their use for controlling harmful fungi. Particular examples of pesticide combinations B include the following combinations B.1 to B.15:

| # | PC1' | PC2' | 3^{rd} pesticide |
|---|---|---|---|
| B.1 | PC1'.1 | dodemorph acetate | metalaxyl |
| B.2 | PC1'.2 | dodemorph acetate | metalaxyl |
| B.3 | PC1'.3 | dodemorph acetate | metalaxyl |
| B.4 | PC1'.1 | fenoxalil | metalaxyl |
| B.5 | PC1'.2 | fenoxalil | metalaxyl |
| B.6 | PC1'.3 | fenoxalil | metalaxyl |
| B.7 | PC1'.1 | imazalil | metalaxyl |
| B.8 | PC1'.2 | imazalil | metalaxyl |
| B.9 | PC1'.3 | imazalil | metalaxyl |
| B.10 | PC1'.1 | pyrimetanil | metalaxyl |
| B.11 | PC1'.2 | pyrimetanil | metalaxyl |
| B.12 | PC1'.3 | pyrimetanil | metalaxyl |
| B.13 | PC1'.1 | metrafenone | metalaxyl |
| B.14 | PC1'.2 | metrafenone | metalaxyl |
| B.15 | PC1'.3 | metrafenone | metalaxyl |

In the two-component compositions A according to the invention the weight ratio of the component PC'1 and the component PC'2 generally depends from the properties of the active components used, usually it is in the range of from 1:10,000 to 10,000:1, often it is in the range of from 1:100 to 100:1, regularly in the range of from 1:50 to 50:1, preferably in the range of from 1:20 to 20:1, more preferably in the range of from 1:10 to 10:1, even more preferably in the range of from 1:4 to 4:1 and in particular in the range of from 1:2 to 2:1. According to further embodiments of the two-component compositions A, the weight ratio of the component PC'1 and the component PC'2 usually is in the range of from 1000:1 to 1:1, often in the range of from 100: 1 to 1:1, regularly in the range of from 50:1 to 1:1, preferably in the range of from 20:1 to 1:1, more preferably in the range of from 10:1 to 1:1, even more preferably in the range of from 4:1 to 1:1 and in particular in the range of from 2:1 to 1:1. According to further embodiments of the two-component compositions A, the weight ratio of the component PC'1 and the component PC'2 usually is in the range of from 20,000:1 to 1:10, often in the range of from 10,000:1 to 1:1, regularly in the range of from 5,000:1 to 5:1, preferably in the range of from 5,000:1 to 10:1, more preferably in the range of from 2,000:1 to 30:1, even more preferably in the range of from 2,000:1 to 100:1 and in particular in the range of from 1,000:1 to 100:1. According to a further embodiments of the two-component compositions A, the weight ratio of the component PC'1 and the component PC'2 usually is in the range of from 1:1 to 1:1000, often in the range of from 1:1 to 1:100, regularly in the range of from 1:1 to 1:50, preferably in the range of from 1:1 to 1:20, more preferably in the range of from 1:1 to 1:10, even more preferably in the range of from 1:1 to 1:4 and in particular in the range of from 1:1 to 1:2. According to further embodiments of the two-component compositions A, the weight ratio of the component PC'1 and the component PC'2 usually is in the range of from 10:1 to 1:20,000, often in the range of from 1:1 to 1:10,000, regularly in the range of from 1:5 to 1:5,000, preferably in the range of from 1:10 to 1:5,000, more preferably in the range of from 1:30 to 1:2,000, even more preferably in the range of from 1:100 to 1:2,000 to and in particular in the range of from 1:100 to 1:1,000.

In the three-component compositions B, i.e. compositions according to the invention comprising the component PC'1 and the component PC'2 and component 3, i.e. metalaxyl, the weight ratio of component PC'1 and the component PC'2 depends from the properties of the active substances used, usually it is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1, and the weight ratio of component PC'1 and metalaxyl usually is in the range of from 1:100 to 100:1, regularly in the range of from 1:50 to 50:1, preferably in the range of from 1:20 to 20:1, more preferably in the range of from 1:10 to 10:1 and in particular in the range of from 1:4 to 4:1.

These ratios are also suitable for inventive compositions applied by seed treatment. The compositions A and B and likewise the co-formulations according to the invention are suitable as fungicides. They are distinguished by an outstanding effectiveness against a broad spectrum of phytopathogenic fungi, including soil-borne fungi, which derive especially from the classes of the Plasmodiophoromycetes, Peronosporomycetes (syn. Oomycetes), Chytridiomycetes, Zygomycetes, Ascomycetes, Basidiomycetes and Deuteromycetes (syn. Fungi imperfecti). Some are systemically effective and they can be used in crop protection as foliar fungicides, fungicides for seed dressing and soil fungicides. Moreover, they are suitable for controlling harmful fungi, which inter alia occur in wood or roots of plants.

The compositions A and B and likewise the co-formulations according to the invention are particularly important in the control of a multitude of phytopathogenic fungi on various cultivated plants, such as cereals, e. g. wheat, rye, barley, triticale, oats or rice; beet, e. g. sugar beet or fodder beet; fruits, such as pomes, stone fruits or soft fruits, e. g. apples, pears, plums, peaches, almonds, cherries, strawberries, raspberries, blackberries or gooseberries; leguminous plants, such as lentils, peas, alfalfa or soybeans; oil plants, such as rape, mustard, olives, sunflowers, coconut, cocoa beans, castor oil plants, oil palms, ground nuts or soybeans; cucurbits, such as squashes, cucumber or melons; fiber plants, such as cotton, flax, hemp or jute; citrus fruit, such as oranges, lemons, grapefruits or mandarins; vegetables, such as spinach, lettuce, asparagus, cabbages, carrots, onions, tomatoes, potatoes, cucurbits or paprika; lauraceous plants, such as avocados, cinnamon or camphor; energy and raw material plants, such as corn, soybean, rape, sugar cane or oil palm; corn; tobacco; nuts; coffee; tea; bananas; vines (table grapes and grape juice grape vines); hop; turf; sweet leaf (also called Stevia); natural rubber plants or ornamental and forestry plants, such as flowers, shrubs, broad-leaved trees or evergreens, e. g. conifers; and on the plant propagation material, such as seeds, and the crop material of these plants.

The term "plant propagation material" is to be understood to denote all the generative parts of the plant such as seeds and vegetative plant material such as cuttings and tubers (e. g. potatoes), which can be used for the multiplication of the plant. This includes seeds, roots, fruits, tubers, bulbs, rhizomes, shoots, sprouts and other parts of plants, including seedlings and young plants, which are to be transplanted after germination or after emergence from soil. These young plants may also be protected before transplantation by a total or partial treatment by immersion or pouring.

Preferably, treatment of plant propagation materials with the compositions and likewise the co-formulations can be used for controlling a multitude of fungi on cereals, such as wheat, rye, barley and oats; rice, corn, cotton and soybeans.

The term "cultivated plants" is to be understood as including plants which have been modified by breeding, mutagenesis or genetic engineering including but not limiting to agricultural biotech products on the market or in development (cf. http://cera-gmc.org/, see GM crop database therein). Genetically modified plants are plants, which genetic material has been so modified by the use of recombinant DNA techniques that under natural circumstances cannot readily be obtained by cross breeding, mutations or natural recombination. Typically, one or more genes have been integrated into the genetic material of a genetically modified plant in order to improve certain properties of the plant. Such genetic modifications also include but are not limited to targeted post-translational modification of protein(s), oligo- or polypeptides e. g. by glycosylation or polymer additions such as prenylated, acetylated or farnesylated moieties or PEG moieties.

The compositions A and B and likewise the co-formulations of the present invention are particularly suitable for controlling the following plant diseases:
*Albugo* spp. (white rust) on ornamentals, vegetables (e. g. *A. candida*) and sunflowers (e. g. *A. tragopogonis*); *Alternaria* spp. (Alternaria leaf spot) on vegetables, rape (*A. brassicola* or *brassicae*), sugar beets (*A. tenuis*), fruits, rice, soybeans, potatoes (e. g. *A. solani* or *A. alternata*), tomatoes (e. g. *A. solani* or *A. alternata*) and wheat; *Aphano-myces* spp. on sugar beets and vegetables; *Ascochyta* spp. on cereals and vegetables, e. g. *A. tritici* (anthracnose) on wheat and *A. hordei* on barley; *Bipolaris* and *Drechslera* spp. (teleomorph: *Cochliobolus* spp.), e. g. Southern leaf blight (*D. maydis*) or Northern leaf blight (*B. zeicola*) on corn, e. g. spot blotch (*B. sorokiniana*) on cereals and e. g. *B. oryzae* on rice and turfs; *Blumeria* (formerly *Erysiphe*) *graminis* (powdery mildew) on cereals (e. g. on wheat or barley); *Botrytis cinerea* (teleomorph: *Botryotinia fuckeliana*: grey mold) on fruits and berries (e. g. strawberries), vegetables (e. g. lettuce, carrots, celery and cabbages), rape, flowers, vines, forestry plants and wheat; *Bremia lactucae* (downy mildew) on lettuce; *Ceratocystis* (syn. *Ophiostoma*) spp. (rot or wilt) on broad-leaved trees and evergreens, e. g. *C. ulmi* (Dutch elm disease) on elms; *Cercospora* spp. (Cercospora leaf spots) on corn (e. g. Gray leaf spot: *C. zeae-maydis*), rice, sugar beets (e. g. *C. beticola*), sugar cane, vegetables, coffee, soybeans (e. g. *C. sojina* or *C*. *kikuchii*) and rice; *Cladosporium* spp. on tomatoes (e. g. *C. fulvum*: leaf mold) and cereals, e. g. *C. herbarum* (black ear) on wheat; *Claviceps purpurea* (ergot) on cereals; *Cochliobolus* (anamorph: *Helminthosporium* of *Bipolaris*) spp. (leaf spots) on corn (*C*. *carbonum*), cereals (e. g. *C. sativus,* anamorph: *B. sorokiniana*) and rice (e. g. *C*. *miyabeanus,* anamorph: *H. oryzae*); *Colletotrichum* (teleomorph: *Glomerella*) spp. (anthracnose) on cotton (e. g. *C. gossypii*), corn (e. g. *C. graminicola:* Anthracnose stalk rot), soft fruits, potatoes (e. g. *C. coccodes*: black dot), beans (e. g. *C. lindemuthi-anum*) and soybeans (e. g. *C. truncatum* or *C. gloeosporioides*); *Corticium* spp., e. g. *C. sasakii* (sheath blight) on rice; *Corynespora cassiicola* (leaf spots) on soybeans and ornamentals; *Cycloconium* spp., e. g. *C. oleaginum* on olive trees; *Cylindrocarpon* spp. (e. g. fruit tree canker or young vine decline, teleomorph: *Nectria* or *Neonectria* spp.) on fruit trees, vines (e. g. *C. liriodendri*, teleomorph: *Neonectria liriodendri* Black Foot Disease) and ornamentals; *Dematophora* (teleomorph: *Rosellinia*) *necatrix* (root and stem rot) on soybeans; *Diaporthe* spp., e. g. *D. phaseolorum* (damping off) on soybeans; *Drechslera* (syn. *Helminthosporium,* teleomorph: *Pyrenophora*) spp. on corn, cereals, such as barley (e. g. *D. teres,* net blotch) and wheat (e. g. *D. tritici-repentis*: tan spot), rice and turf; Esca (dieback, apoplexy) on vines, caused by *Formitiporia* (syn. *Phellinus*) *punctata, F. mediterranea, Phaeomoniella chlamydospora* (earlier *Phaeoacremonium chlamydosporum*), *Phaeoacremonium aleophilum* and/or *Botryosphaeria obtusa, Elsinoe* spp. on pome fruits (*E. pyri*), soft fruits (*E. veneta*: anthracnose) and vines (*E. ampelina*: anthracnose); *Entyloma oryzae* (leaf smut) on rice; *Epicoccum* spp. (black mold) on wheat; *Erysiphe* spp. (powdery mildew) on sugar beets (*E. betae),* vegetables (e. g. *E. pisi*), such as cucurbits (e. g. *E. cichoracearum*), cabbages, rape (e. g. *E. cruciferarum*); *Eutypa lata* (Eutypa canker or dieback, anamorph: *Cytosporina lata,* syn. *Libertella blepharis*) on fruit trees, vines and ornamental woods; *Exserohilum* (syn. *Helminthosporium*) spp. on corn (e. g. *E. turcicum*); *Fusarium* (teleomorph: *Gibberella*) spp. (wilt, root or stem rot) on various plants, such as *F. graminearum* or *F. culmorum* (root rot, scab or head blight) on cereals (e. g. wheat or barley), *F. oxysporum* on tomatoes, *F. solani* (f. sp. *glycines* now syn. *F. virguliforme*) and *F. tucumaniae* and *F. brasiliense* each causing sudden death syndrome on soybeans, and *F. verticillioides* on corn; *Gaeumannomyces graminis* (take-all) on cereals (e. g. wheat or barley) and corn; *Gibberella* spp. on cereals (e. g. *G. zeae*) and rice (e. g. *G*. *fujikuroi*: Bakanae disease); *Glomerella cingulata* on vines, pome fruits and other plants and *G. gossypii* on cotton; Grainstaining complex on rice; *Guignardia bidwellii* (black rot) on vines; *Gymnosporangium* spp. on rosaceous plants and junipers, e. g. *G*. *sabinae* (rust) on pears; *Helminthosporium* spp. (syn. *Drechslera,* teleomorph: *Cochliobolus*) on corn, cereals and rice; *Hemileia* spp., e. g. *H. vastatrix* (coffee leaf rust) on coffee; *Isariopsis clavispora* (syn. *Cladosporium vitis*) on vines; *Macrophomina phaseolina* (syn. *phaseoli*) (root and stem rot) on soybeans and cotton; *Microdochium* (syn. *Fusarium*) *nivale* (pink snow mold) on cereals (e. g. wheat or barley); *Microsphaera diffusa* (powdery mildew) on soybeans; *Monilinia* spp., e. g. *M. laxa, M. fructicola* and *M. fructigena* (bloom and twig blight, brown rot) on stone fruits and other rosaceous plants; *Mycosphaerella* spp. on cereals, bananas, soft fruits and ground nuts, such as e. g. *M. graminicola* (anamorph: *Septoria tritici,* Septoria blotch) on wheat or *M. fijiensis* (black Sigatoka disease) on bananas; *Peronospora* spp. (downy mildew) on cabbage (e. g. *P. brassicae*), rape (e. g. *P. parasitica*), onions (e. g. *P. destructor*), tobacco (*P. tabacina*) and soybeans (e. g. *P. manshurica*); *Phakopsora pachyrhizi* and *P. meibomiae* (soybean rust) on soybeans; *Phialophora* spp. e. g. on vines (e. g. *P. tracheiphila* and *P. tetraspora*) and soybeans (e. g. *P. gregata*: stem rot); *Phoma lingam* (root and stem rot) on rape and cabbage and *P. betae* (root rot, leaf spot and damping-off) on sugar beets; *Phomopsis* spp. on sunflowers, vines (e. g. *P. viticola*: can and leaf spot) and soybeans (e. g. stem rot: *P. phaseoli,* teleomorph: *Diaporthe phaseolorum*); *Physoderma maydis* (brown spots) on corn; *Phytophthora* spp. (wilt, root, leaf, fruit and stem root) on various plants, such as paprika and cucurbits (e. g. *P. capsici*), soybeans (e. g. *P. megasperma,* syn. *P. sojae*), potatoes and tomatoes (e. g. *P. infestans:* late blight) and broad-leaved trees (e. g. *P. ramorum*: sudden oak death); *Plasmodiophora brassicae* (club root) on cabbage, rape, radish and other plants; *Plasmopara* spp., e. g. *P. viticola* (grapevine downy mildew) on vines and *P. halstedii* on sunflowers; *Podosphaera* spp. (powdery mildew) on rosaceous plants, hop, pome and soft fruits, e. g. *P. leucotricha* on apples; *Polymyxa* spp., e. g. on cereals, such as barley and wheat (*P. graminis*) and sugar beets (*P. betae*) and thereby transmitted viral diseases; *Pseudocercosporella herpotrichoides* (eyespot, teleomorph: *Tapesia yallundae*) on cereals, e. g. wheat or barley; *Pseudoperonospora* (downy mildew) on various plants, e. g. *P. cubensis* on cucurbits or *P. humili* on hop; *Pseudopezicula tracheiphila* (red fire disease or ,rotbrenner', anamorph: *Phialophora*) on vines; *Puccinia* spp. (rusts) on various plants, e. g. *P. triticina* (brown or leaf rust), *P. striiformis* (stripe or yellow rust), *P. hordei* (dwarf rust), *P. graminis* (stem or black rust) or *P. recondita* (brown or leaf rust) on cereals, such as e. g. wheat, barley or rye, *P. kuehnii* (orange rust) on sugar cane and *P. asparagi* on asparagus; *Pyrenophora* (anamorph: *Drechslera*) *tritici-repentis* (tan spot) on wheat or *P. teres* (net blotch) on barley; *Pyricularia* spp., e. g. *P. oryzae* (teleomorph: *Magnaporthe grisea,* rice blast) on rice and *P. grisea* on turf and cereals; *Pythium* spp. (damping-off) on turf, rice, corn, wheat, cotton, rape, sunflowers, soybeans, sugar beets, vegetables and various other plants (e. g. *P. ultimum* or *P. aphanidermatum*); *Ramularia* spp., e. g. *R. collo-cygni* (Ramularia leaf spots, Physiological leaf spots) on barley and *R. beticola* on sugar beets; *Rhizoctonia* spp. on cotton, rice, potatoes, turf, corn, rape, potatoes, sugar beets, vegetables and various other plants, e. g. *R. solani* (root and stem rot) on soybeans, *R. solani* (sheath blight) on rice or *R. cerealis* (Rhizoctonia spring blight) on wheat or barley; *Rhizopus stolonifer* (black mold, soft rot) on strawberries, carrots, cabbage, vines and tomatoes; *Rhynchosporium secalis* (scald) on barley, rye and triticale; *Sarocladium oryzae* and *S. attenuatum* (sheath rot) on rice; *Sclerotinia* spp. (stem rot or white mold) on vegetables and field crops, such as rape, sunflowers (e. g. *S. sclerotiorum*) and soybeans (e. g. *S. rolfsii* or *S. sclerotiorum*); *Septoriaspp.* on various plants, e. g. *S. glycines* (brown spot) on soybeans, *S. tritici* (Septoria blotch) on wheat and *S.* (syn. *Stagonospora*) nodorum (Stagonospora blotch) on cereals; *Uncinula* (syn. *Erysiphe*) *necator* (powdery mildew, anamorph: *Oidium tuckeri*) on vines; *Setospaeria* spp. (leaf blight) on corn (e. g. *S. turcicum*, syn. *Helminthosporium turcicum*) and turf; *Sphacelotheca* spp. (smut) on corn, (e. g. *S. reiliana*: head smut), sorghum und sugar cane; *Sphaerotheca fuliginea* (powdery mildew) on cucurbits; *Spongospora subterranea* (powdery scab) on potatoes and thereby transmitted viral diseases; *Stagonospora* spp. on cereals, e. g. *S. nodorum* (Stagonospora blotch, teleomorph: *Leptosphaeria* [syn. *Phaeosphaeria*] *nodorum*) on wheat; *Synchytrium endobioticum* on potatoes (potato wart disease); *Taphrina* spp., e. g. *T. deformans* (leaf curl disease) on peaches and *T. pruni* (plum pocket) on plums; *Thielaviopsis* spp. (black root rot) on tobacco, pome fruits, vegetables, soybeans and cotton, e. g. *T. basicola* (syn. *Chalara elegans*); *Tilletia* spp. (common bunt or stinking smut) on cereals, such as e. g. *T. tritici* (syn. *T. caries,* wheat bunt) and *T. controversa* (dwarf bunt) on wheat; *Typhula incarnata* (grey snow mold) on barley or wheat; *Urocystis* spp., e. g. *U. occulta* (stem smut) on rye; *Uromyces* spp. (rust) on vegetables, such as beans (e. g. *U. appendiculatus,* syn. *U. phaseoli*) and sugar beets (e. g. *U. betae*); *Ustilago* spp. (loose smut) on cereals (e. g. *U. nuda* and *U. avaenae*), corn (e. g. *U. maydis:* corn smut) and sugar cane; *Venturia* spp. (scab) on apples (e. g. *V. inaequalis*) and pears; and *Verticillium* spp. (wilt) on various plants, such as fruits and ornamentals, vines, soft fruits, vegetables and field crops, e. g. *V*. *dahliae* on strawberries, rape, potatoes and tomatoes.

The compositions A and B and likewise the co-formulations of the present invention are also suitable for controlling harmful fungi in the protection of stored products or harvest and in the protection of materials.

The term "protection of materials" is to be understood to denote the protection of technical and non-living materials, such as adhesives, glues, wood, paper and paperboard, textiles, leather, paint dispersions, plastics, cooling lubricants, fiber or fabrics, against the infestation and destruction by harmful microorganisms, such as fungi and bacteria. As to the protection of wood and other materials, the particular attention is paid to the following harmful fungi: Ascomycetes such as *Ophiostomaspp., Ceratocystis* spp., *Aureobasidium pullulans*, *Sclerophoma* spp., *Chaetomium* spp., *Humicola* spp., *Petriella* spp., *Trichurus* spp.; Basidiomycetes such as *Coniophora* spp., *Coriolus* spp., *Gloeophyllum* spp., *Lentinus* spp., *Pleurotus* spp., *Poria* spp., *Serpula* spp. and *Tyromyces* spp., Deuteromycetes such as *Aspergillus* spp., *Cladosporium* spp., *Penicillium* spp., *Trichoderma* spp., *Alternaria* spp., *Paecilomyces* spp. and Zygomycetes such as *Mucorspp.,* and in addition in the protection of stored products and harvest the following yeast fungi are worthy of note: *Candida* spp. and *Saccharomyces cerevisae.*

The compositions A and B and likewise the co-formulations of the present invention may also be used for improving the health of a plant. The invention also relates to a method for improving plant health by treating a plant, its propagation material and/or the locus where the plant is growing or is to grow with an effective amount of the compositions or the components thereof, respectively.

The term "plant health" is to be understood to denote a condition of the plant and/or its products which is determined by several indicators alone or in combination with each other such as yield (e. g. increased biomass and/or increased content of valuable ingredients), plant vigor (e. g. improved plant growth and/or greener leaves ("greening effect")), quality (e. g. improved content or composition of certain ingredients) and tolerance to abiotic and/or biotic stress. The above identified indicators for the health condition of a plant may be interdependent or may result from each other.

The compositions A and B or components thereof, respectively, are employed as such or in form of agrochemical compositions by treating the fungi or the plants, plant propagation materials, such as seeds, soil, surfaces, materials or rooms to be protected from fungal attack with a fungicidally effective amount of the active substances. The application can be carried out both before and after the infection of the plants, plant propagation materials, such as seeds, soil, surfaces, materials or rooms by the fungi.

Plant propagation materials may be treated with the compositions A or B, respectively, or the components thereof, respectively, as such or as agrochemical composition prophylactically either at or before planting or transplanting.

The invention also relates to agrochemical formulations of compositions A and also to agrochemical formulations of compositions B comprising an auxiliary and the composition A or B according to the invention.

An agrochemical composition comprises a fungicidally effective amount of the components PC'1, PC'2 and optionally metalaxyl of the compositions A or B, respectively. The term "effective amount" denotes an amount of the components PC'1, PC'2 and optionally metalaxyl of the compositions A or B, which is sufficient for controlling harmful fungi on cultivated plants or in the protection of materials and which does not result in a substantial damage to the treated plants. Such an amount can vary in a broad range and is dependent on various factors, such as the fungal species to be controlled, the treated cultivated plant or material, the climatic conditions and the specific composition used.

The compositions A or B, respectively, or components thereof, respectively, can be converted into customary types of agrochemical compositions, e. g. solutions, emulsions, suspensions, dusts, powders, pastes, granules, pressings, capsules, and mixtures thereof. Examples for composition types are suspensions (e. g. SC, OD, FS), emulsifiable concentrates (e. g. EC), emulsions (e. g. EW, EO, ES, ME), capsules (e. g. CS, ZC), pastes, pastilles, wettable powders or dusts (e. g. WP, SP, WS, DP, DS), pressings (e. g. BR, TB, DT), granules (e. g. WG, SG, GR, FG, GG, MG), insecticidal articles (e. g. LN), as well as gel formulations for the treatment of plant propagation materials such as seeds (e. g. GF). These and further compositions types are defined in the "Catalogue of pesticide formulation types and international coding system", Technical Monograph No. 2, 6th Ed. May 2008, CropLife International.

The compositions are prepared in a known manner, such as described by Mollet and Grubemann, Formulation technology, Wiley VCH, Weinheim, 2001; or Knowles, New developments in crop protection product formulation, Agrow Reports DS243, T&F Informa, London, 2005.

By applying the components of the inventive compositions A or B, respectively, together a synergistic effect can be obtained, i.e. more then simple addition of the individual effects is obtained (synergistic mixtures).

This can be obtained by applying the components simultaneously, either jointly (e. g. as tank-mix) or separately, or in succession, wherein the time interval between the individual applications is selected to ensure that the active substance applied first still occurs at the site of action in a sufficient amount at the time of application of the further active substance(s). The order of application is not essential for working of the present invention.

The following examples shall further illustrate the present invention.

### Analytics:

Particle size of the aqueous suspensions and final formulations were determined on appropriate aqueous dilutions by laser light scattering of aqueous dilutions in a accordance with the method of ISO 13320-1:1999(E) at 22°C (ambient temperature) using a Malvern Mastersizer 2000 or 3000. The particle size distributions are calculated by an interpretation of the sample's scattering pattern using the Fraunhofer model.

Wet sieve residues were determined in accordance with CIPAC procedure 59.3 using sieves with 150 µm and 45 µm meshes.

A conventional light microscope was used to observe crystallinity and particles sizes of the pesticide compound material.

### Materials

Surfactant S1: comb polymer of methyl methacrylate, methacrylic acid and (methoxypolyethylene glycol)methacrylate, 33% solution in 1:1 mixture propylene glycol/water (commercially available, for example as Atlox® 4913 from Croda or Tersperse 2500 from Huntsman).
Surfactant S2: Ammonium salt of the semisulfate of an ethoxilated tristyrylphenol (Soprophor 4D384 from Solvay or Tersperse 2218 from Huntsman)
Surfactant S3: sodium salt of a naphthalene formaldehyde condensate (Morwet® D425, Akzo Nobel or Tersperse 2020 from Huntsman)
Surfactant S4: sodium salt of a phenolsulfonic urea formaldehyde condensate (Wettol D1 or Vultamol DN BASF SE)
Surfactant S5: poly(ethylene glycol block propylene glycol block polyethylene glycol) (Pluronic PE 10500)
Surfactant S6: graft polymer of vinyl acetate on polyethylene glycol (commercially available, for example as Sokalan PG 101 of BASF SE).
Thickener 1: Xanthan Gum, Kelzan® S (Kelco).
Thickener solution: 2% b.w. aqueous solution of Xanthan Gum in water containing 0.7% b.w. of biocide.
Defoamer: Silicon based defoamer, Silicon SRE-PFL from Wacker
Biozide: Isothiazolinone based biocide: Acticide® mbs of Thor

### Examples 1 to 6, comparative example C1:

Water, 1,3-propylene glycol and surfactants are charged to a reaction vessel and homogenized. Crystalline metalaxyl M was added to the mixture and stirred for 4 h at 350 rpm and 21°C by means of a magnetic stirring bar. Then, pyraclostrobin and fluxapyroxad were added and the mixture was stirred for 4 h at 350 rpm and 21°C by means of a magnetic stirring bar. The relative amounts of active ingredients are given in table 1.

The obtained composition was allowed to stand at 21°C and after 1 h, 5 ml of the composition were filtered over a 0.22 µm filter and the content of the active ingredients in the liquor was analysed by HPLC. The results are summarized in table 2.

The compositions were stored for 2 weeks at -5°C. Every three days the samples were stirred for 30 minutes at 350 rpm to affect crystallization. 5 ml of the composition were filtered over a 0.22 µm filter and the content of the active ingredients in the liquor was analysed by HPLC. The results are summarized in table 3.

**Table 1: Overall composition of the formulation**

| Ingredients¹⁾ | C1²⁾ | 1 | 2 | 3 | 4 | 5 | 6 |
|---|---|---|---|---|---|---|---|
| S1 | 3.0 | - | - | - | - | - | - |
| S2 | 1.0 | - | - | - | 1.0 | - | - |
| S3 | - | 3.0 | 1.0 | 3.0 | 3.0 | - | - |
| S4 | - | 1.0 | 1.0 | 1.0 | - | 1.0 | 1.0 |
| S5 | - | - | 1.0 | 1.0 | - | - | - |
| S6 | - | - | - | - | - | 3.0 | 10.0 |
| 1,2-PG ³⁾ | 20.1 | 20.2 | 20.2 | 20.2 | 20.2 | 20.2 | 19.9 |
| Metalaxyl | 3.0 | 3.0 | 3.0 | 3.0 | 3.0 | 3.0 | 4.0 |
| Pyraclostrobin | 0.8 | 0.8 | 0.8 | 0.8 | 0.8 | 0.8 | 0.8 |
| Fluxapyroxad | 0.8 | 0.8 | 0.8 | 0.8 | 0.8 | 0.8 | 0.8 |
| Water | 71.3 | 71.2 | 72.2 | 71.2 | 71.2 | 71.2 | 63.3 |

| | | | | | | | |
|---|---|---|---|---|---|---|---|
| 1)All amounts given in % by weight, based on the weight of the formulation 2)comparative example 3)1,2-PG: 1,2-propylene glycol | | | | | | | |

**Table 2: Concentration in the liquor at 20°C in % by weight**

| | C1 | 1 | 2 | 3 | 4 | 5 | 6 |
|---|---|---|---|---|---|---|---|
| Metalaxyl | 1.6 | 2.6 | 2.0 | 2.7 | 2.6 | 1.8 | 2.9 |
| Pyraclostrobin | 0.16 | 0.13 | 0.23 | 0.34 | 0.27 | 0.53 | **1.6** |
| Fluxapyroxad | 0.05 | 0.07 | 0.09 | 0.13 | 0.12 | 0.18 | 0.53 |

**Table 3: Concentration in the liquor after storage at -5°C in % by weight**

| | C1 | 1 | 2 | 3 | 4 | 5 | 6 |
|---|---|---|---|---|---|---|---|
| Metalaxyl | 1.0 | 2.8 | 2.0 | 2.7 | 2.5 | 1.4 | 2.1 |
| Pyraclostrobin | 0.07 | 0.13 | 0.08 | 0.20 | 0.21 | 0.25 | 1.1 |
| Fluxapyroxad | 0.04 | 0.08 | 0.05 | 0.11 | 0.12 | 0.14 | 0.44 |

### Examples 7 to 11 and comparative example C2

### General procedure

In a first step a mill base of fluxapyroxad/pyraclostrobin was prepared containing 20% by weight of each active ingredient related to total mill base weight, 17% by weight of respective surfactant related to total amount of this respective surfactant in the final product, 0.5% by weight of defoamer, related to total mill base amount and 80% by weight water related to total water quantity in the mill base. After bead milling, biocide (0.4% by weight, related to total mill base weight) and thickener (0.15% by weight, related to total mill base weight) and remaining water are added.

Final products were prepared as follows:
Water (64% by weight, related to total water quantity in final product), surfactants (remaining quantity), propylene glycol (19% by weight related to total final product weight), defoamer (92% by weight of total Silicone amount) and biocide (92.5% by weight related to total biocide amount) are combined and metalaxyl (13.3 g/L) is added to the slurry with stirring. The obtained mixture is stirred for 2 h at 20°C and 1h at 40°C to achieve complete dissolution of metalaxyl. Then thickener solution in an amount of 96% by weight of total thickener amount in final formulation are added and the mixture is stirred for further 2 h at 500 rpm.

Then, the mill base of fluxapyroxad/pyraclostrobin is added in appropriate amount to obtain 16.7 g/L of each active in the final formulation. Remaining 30% of water related to total water content in formulation is added to the end.

The overall composition is given in the following table 4.

**Table 4: Overall composition of the formulations**

| | C2²⁾ | 7 | 8 | 9 | 10 | 11 |
|---|---|---|---|---|---|---|
| Ingredients¹⁾ | | | | | | |
| 1,2-PG ³⁾ | 200 | 200 | 200 | 200 | 200 | 200 |
| Biocide | 4.0 | 4.0 | 4.0 | 4.0 | 4.0 | 4.0 |
| Fluxapyroxad | 16.7 | 16.7 | 16.7 | 16.7 | 16.7 | 16.7 |
| Metalaxyl | 13.3 | 13.3 | 13.3 | 13.3 | 13.3 | 13.3 |
| Pyraclostrobin | 16.7 | 16.7 | 16.7 | 16.7 | 16.7 | 16.7 |
| S1 | 30 | - | - | - | - | - |
| S2 | 10 | - | - | 20 | - | - |
| S3 | - | 30 | 20 | 30 | - | - |
| S4 | - | 10 | 10 | - | 10 | 10 |
| S5 | - | - | 10 | - | - | - |
| S6 | - | - | - | - | 30 | 100 |
| Defoamer | 5.0 | 5.0 | 5.0 | 5.0 | 5.0 | 5.0 |
| Water | 751 | 751 | 751 | 751 | 751 | 682 |

| Ingredients¹⁾ | | | | | | |
|---|---|---|---|---|---|---|
| Thickener | 3.1 | 3.1 | 3.1 | 3.0 | 3.1 | 2.5 |

| | | | | | | |
|---|---|---|---|---|---|---|
| 1)All amounts given in g/L 2)comparative example 3)1,2-PG: 1,2-propylene glycol | | | | | | |

The thus obtained formulations were stored for 8 weeks at cycling temperatures from -10°C to +10°C with a cycling rate of 12 h. Then the wet sieve residue using a 150 µm mesh and particle size were determined. The results are summarized in table 5.

**Table 5:**

| | C2 | 7 | 8 | 9 | 10 | 11 |
|---|---|---|---|---|---|---|
| Wet sieve residue [%]¹⁾ | 0.03 | < 0.01 | < 0.01 | < 0.01 | < 0.01 | < 0.01 |
| D₅₀ [µm] | 1.7 | 1.4 | 1.6 | 1.4 | 1.7 | 1.9 |
| D₉₀ [µm] | 4.3 | 3.4 | 4.1 | 3.3 | 4.6 | 4.9 |

### Examples 12 to 14 and comparative examples C3 to C5

The formulations of examples 12 to 14 and comparative examples C3 to C5 were prepared using the following mill bases 1 to 6. The mill bases were prepared by analogy to the protocol for preparing the mill base fluxapyroxad/pyraclostrobin described in example 7. The mill bases 1 to 6 had the following compositions:
Mill base 1: Aqueous suspension containing 18.4% by weight of pyraclostrobin, 11% of glycerol, a mixture of surfactants S1 and S2 (about 4.4% by weight), formulation additives (thickener, antifoam and biocide, total amount about 1%) and water to 100%.
Mill base 2: Aqueous suspension containing 9.0% by weight of pyraclostrobin, 18% by weight of boscalid, 9% of glycerol, a mixture of surfactants S1 and S2 (about 4.4% by weight), formulation additives (thickener, antifoam and biocide, total amount about 1%) and water to 100%.
Mill base 3: Aqueous suspension containing 44% by weight of triticonazol, 5% of glycerol, a mixture of surfactants S1 and S2 (about 8% by weight), formulation additives (thickener, antifoam and biocide, total amount about 0.7%) and water to 100%.
Mill base 4: Aqueous suspension containing 40 % by weight of pyraclostrobin, 6 % of 1,2-proplyene glycol, a mixture of surfactants S3, S4 and S5 (about 4.8 % by weight), formulation additives (thickener, antifoam and biocide, total amount about 0.6 %) and water to 100 %.
Mill base 5: Aqueous suspension containing 18% by weight of boscalid, 6% of 1,2-proplyene glycol, a mixture of surfactants S4 and S5 (about 4.2% by weight), formulation additives (thickener, antifoam and biocide, total amount about 0.8%) and water to 100%.
Mill base 6: Aqueous suspension containing 40% by weight of triticonazol, 7% of 1,2-proplyene glycol, a mixture of surfactants S4 and S5 (about 5.0% by weight), formulation additives (thickener, antifoam and biocide, total amount about 0.8%) and water to 100%.

Metalaxyl was used as a 10% solution of metalaxyl in 1,2-proplyene glycol.

Final products C3 and C4 were prepared as follows:
Water (remaining quantity), surfactants (remaining quantity), 1,2-propylene glycol (remaining quantity), defoamer (remaining quantity), thickener (remaining quantity) and biocide (remaining quantity) were combined and metalaxyl solution was added to the slurry with stirring. To the obtained mixture mill base 1 and mill base 2 were successively added with stirring and the mixture was stirred for further 2 h at 500 rpm to obtain the final formulation. The recipe is given in table 6.

Final product C5 was prepared as follows:
Water (remaining quantity), surfactants (remaining quantity), propylene glycol (remaining quantity), defoamer (remaining quantity), and biocide (remaining quantity) were combined and millbase 3 was added with stirring. Then the thickener (remaining quantity) and metalaxyl solution was added to the slurry with stirring. The obtained mixture mill base 1 was added with stirring and the mixture was stirred for further 2 h at 500 rpm to obtain the final formulation. The recipe is given in table 6.

Final products 12 to 14 were prepared as follows:
Water (remaining quantity), surfactants (remaining quantity), propylene glycol (remaining quantity) and defoamer (remaining quantity) were combined. to the thus obtained mixture, mill base 5 or millbase 6 were added with stirring. To the thus obtained slurry thickener (remaining quantity) and biocide (remaining quantity) were added followed by the addition of the metalaxyl solution with stirring. To the obtained mixture mill base 1 was added with stirring and the obtained mixture was stirred for further 2 h at 500 rpm to obtain the final formulation. The recipe is given in table 6.

**Table 6: Overall composition of the formulations**

| Ingredients¹⁾ | C3²⁾ | 12 | C4²⁾ | 13 | C5²⁾ | 14 |
|---|---|---|---|---|---|---|
| Pyraclostrobin | 20.0 | 20.0 | 20.0 | 20.0 | 20.0 | 20.0 |
| Metalaxyl | 14.0 | 14.0 | 20.0 | 20.0 | 14.0 | 14.0 |
| Boscalid | 20.0 | 20.0 | 20.0 | 20.0 | -- | -- |
| Triticonazol | -- | -- | -- | -- | 20.0 | 20.0 |
| 1,2-PG ³⁾ | 200 | 200 | 200 | 200 | 200 | 200 |
| S1 | 30 | -- | 30 | -- | 30 | -- |
| S2 | 10 | -- | 10 | -- | 10 | -- |
| S3 | -- | 20 | -- | 20 | -- | 20 |
| S4 | -- | 10 | -- | 10 | -- | 10 |
| S5 | -- | 10 | -- | 10 | -- | 10 |
| Thickener | 2.5 | 2.5 | 2.5 | 2.5 | 2.5 | 2.5 |
| Glycerol | 15.6 | -- | 15.6 | -- | 14.3 | -- |
| Biocide | 2.0 | 2.0 | 2.0 | 2.0 | 2.0 | 2.0 |
| Defoamer | 5.0 | 5.0 | 5.0 | 5.0 | 5.0 | 5.0 |
| Water | to 1 L | to 1 L | to 1 L | to 1 L | to 1 L | to 1 L |

| | | | | | | |
|---|---|---|---|---|---|---|
| 1)All amounts given in g/L 2)comparative example 3)1,2-PG: 1,2-propylene glycol | | | | | | |

The thus obtained formulations were stored for 7 weeks at cycling temperatures from -10°C to +10°C with a cycling rate of 12 h. Then the wet sieve residue using a 150 µm mesh was determined.

**Table 7:**

| | C3 | 12 | C4 | 13 | C5 | 14 |
|---|---|---|---|---|---|---|
| Wet sieve residue [%]¹⁾ | 0.05 | < 0.01 | 0.75 | < 0.01 | 0.04 | < 0.01 |

## Claims

1. An aqueous co-formulation of metalaxyl containing
i. metalaxyl;
ii. at least one organic pesticide compound PC1, which has a solubility in water of at most 1 g/l at 20°C and a melting point in the range from 40 to 100°C; and
iii. an aqueous phase containing water and at least one surfactant;
wherein the at least one organic pesticide compound PC1 is present in the form of particles suspended in the aqueous phase and where at least 95 % of the metalaxyl present in the aqueous co-formulation is present dissolved in the aqueous phase and where the surfactant comprises at least one salt of an oligomer or polymer having a plurality of arylsulfonate groups selected from the group consisting of the salts of naphthalinsulfonic acid formaldehyde condensates, phenolsulfonic acid formaldehyde condensates, naphthalinsulfonic acid urea formaldehyde condensates and phenolsulfonic acid formaldehyde urea condensates, and mixtures thereof,
which is obtainable by a process comprising
a) providing a suspension of metalaxyl in an aqueous phase containing water, the at least one surfactant, which comprises the at least one salt of an oligomer or polymer having a plurality of arylsulfonate groups;
b) treating the suspension until at least 98% of the metalaxyl present in the aqueous suspension of step a) is present in dissolved form, to obtain an aqueous composition of metalaxyl, wherein metalaxyl is present in dissolved form;
c) mixing the aqueous composition of metalaxyl obtained in step b) with an aqueous suspension of the further organic pesticide compound PC1.

2. The co-formulation of claim 1, wherein the surfactant further comprises an oligomeric or polymeric surfactant having at least one poly(C₂-C₄-alkylene oxide) group.

3. The co-formulation of claim 2, wherein the oligomeric or polymeric surfactant having at least one poly(C₂-C₄-alkylene oxide) group is selected from the group consisting of ethylenoxide-co-propylenoxide block copolymers, graft or comb polymers having a plurality of poly(C₂-C₄-alkylene oxide) side chains attached to a polymeric backbone of polymerized ethylenically unsaturated monomers, graft or comb polymers containing a poly-C₂-C₄-alkylene oxide backbone and polymeric side chains of polymerized ethylenically unsaturated monomers, and salts of the sulfates or phosphates of ethoxylated di- or tristyrylphenol.

4. The co-formulation of claim 3, wherein the oligomeric or polymeric surfactant having at least one poly(C₂-C₄-alkylene oxide) group comprises an ethylenoxide-co-propylenoxide block copolymer.

5. The co-formulation of any of the preceding claims, wherein the organic pesticide compound PC1 is selected from the group consisting of pyraclostrobin, imazalil, dodemorph acetate, pyrimethanil, difenoconazole, ipconazole, trifloxystrobin, fenoxanil, carboxin, metrafenone and acetamiprid and mixtures thereof.

6. The co-formulation of claim 5, where the organic pesticide compound PC1 is pyraclostrobin.

7. The co-formulation of any of the preceding claims, containing
i. 0.2 to 5% by weight, based on the total weight of the co-formulation, of metalaxyl;
ii. 0.2 to 15% by weight, based on the total weight of the co-formulation, of the at least one organic pesticide compound PC1;
iii. 0.2 to 10% by weight, based on the total weight of the co-formulation, of the at least one salt of an oligomer or polymer having a plurality of arylsulfonate groups, the total amount of surfactant being 0.5 to 20% by weight, based on the total weight of the co-formulation; and
iv. at least 50% by weight, based on the total weight of the co-formulation, of water.

8. The co-formulation of any of the preceding claims, further comprising an organic pesticide compound PC2, having a melting point above 100°C and having a water-solubility of at most 5 g/l at 20°C.

9. The co-formulation of claim 8, wherein the organic pesticide compound PC2 is selected from the group consisting of triticonazole, fluxapyroxad, boscalid, metconazole, dimethomorph, prochloraz, thiophanate-methyl, iprodione, epoxiconazole, fenpropimorph, chlorothalonil, fludioxonil, prothioconazole, tebuconazole, propiconazole, thiram, metiram, dithianon, mancozeb, dimoxystrobine, ametoctradin, fipronil, rynaxypyr, thiametoxam, clothianidin, thiacloprid, imidacloprid and dinotefuran and mixtures thereof.

10. The co-formulation of claim 8, wherein the organic pesticide compound PC2 is selected from the group consisting of 2-[2-chloro-4-(4-chlorophenoxy)phenyl]-1-(1,2,4-triazol-1-yl)pent-3-yn-2-ol, 2-[4-(4-chlorophenoxy)-2-(trifluoromethyl)-phenyl]-1-(1,2,4-triazol-1-yl)propan-2-ol and 2-[4-(4-chlorophenoxy)-2-(trifluoromethyl)phenyl]-3-methyl-1-(1,2,4-triazol-1-yl)butan-2-ol and mixtures thereof.

11. The co-formulation of any of claims 8, 9 or 10, where the concentration of the organic pesticide compound PC2 is from 0.1 to 25% by weight, in particular based on the weight of the co-formulation.

12. The co-formulation of any one of the preceding claims, which further contains at least one aliphatic alcohol having at least one OH group.

13. The co-formulation of any of the preceding claims, further comprising at least on thickener, in particular at least one polysaccharide based thickener.

14. A method for producing an aqueous co-formulation of metalaxyl as defined in any of the preceding claims, where the process comprises the following steps:
a) providing a suspension of metalaxyl in an aqueous phase containing water, at least one surfactant, which comprises the at least one salt of an oligomer or polymer having a plurality of arylsulfonate groups,
b) treating the suspension until at least 98 % of the metalaxyl present in the aqueous suspension of step a) is present in dissolved form, to obtain an aqueous composition of metalaxyl, wherein metalaxyl is present in dissolved form;
c) mixing the aqueous composition of metalaxyl obtained in step b) with an aqueous suspension of the further organic pesticide compound PC1.

15. The method of claim 14, where step b) comprises mixing a suspension of metalaxyl with an aqueous solution of the surfactant.

16. The non-therapeutic use of the composition as claimed in any one of claims 1 to 13 for combating phytopathogenic fungi or for improving plant health or for seed treatment.

## Patentansprüche

1. Wässrige Co-Formulierung von Metalaxyl, enthaltend
i. Metalaxyl,
ii. mindestens eine organische Pestizidverbindung PC1 mit einer Löslichkeit in Wasser von maximal 1 g/l bei 20°C und einem Schmelzpunkt im Bereich von 40 bis 100°C und
iii. eine Wasser und mindestens ein Tensid enthaltende wässrige Phase,
wobei die mindestens eine organische Pestizidverbindung PC1 in Form von in der wässrigen Phase suspendierten Partikeln vorliegt und wobei mindestens 95% des in der wässrigen Co-Formulierung vorhandenen Metalaxyl gelöst in der wässrigen Phase vorliegt und wobei das Tensid mindestens ein Salz eines Oligomers oder Polymers mit einer Vielzahl von aus der aus Salzen von Naphthalinsulfonsäure-Formaldehyd-Kondensaten, Phenolsulfonsäure-Formaldehyd-Kondensaten, Naphthalinsulfonsäure-Harnstoff-Formaldehyd-Kondensaten und Phenolsulfonsäure-Formaldehyd-Harnstoff-Kondensaten und Mischungen davon ausgewählten Arylsulfonatgruppen umfasst,
erhältlich durch ein Verfahren, bei dem man
a) eine Suspension von Metalaxyl in einer Wasser und das mindestens eine Tensid, das mindestens eine Salz eines Oligomers oder Polymers mit einer Vielzahl von Arylsulfonatgruppen umfasst, enthaltenden wässrigen Phase bereitstellt,
b) die Suspension behandelt, bis mindestens 98% des in der wässrigen Suspension von Schritt a) vorhandenen Metalaxyls in gelöster Form vorliegt, unter Erhalt einer wässrigen Zusammensetzung von Metalaxyl, bei der Metalaxyl in gelöster Form vorliegt,
c) die in Schritt b) erhaltene wässrige Zusammensetzung von Metalaxyl mit einer wässrigen Suspension der weiteren organischen Pestizidverbindung PC1 mischt.

2. Co-Formulierung nach Anspruch 1, wobei das Tensid weiterhin ein oligomeres oder polymeres Tensid mit mindestens einer Poly(C₂-C₄-alkylenoxid)Gruppe umfasst.

3. Co-Formulierung nach Anspruch 2, wobei das oligomere oder polymere Tensid mit mindestens einer Poly(C₂-C₄-alkylenoxid) Gruppe aus der aus Ethylenoxidco-Propylenoxid-Blockcopolymeren, Pfropf- oder Kammpolymeren mit einer Vielzahl von an ein polymeres Rückgrat von polymerisierten ethylenisch ungesättigten Monomeren gebundenen Poly(C₂-C₄-alkylenoxid)-Seitenketten, Pfropf- oder Kammpolymeren mit einem Poly-C₂-C₄-alkylenoxidrückgrat und polymeren Seitenketten von polymerisierten ethylenisch ungesättigten Monomeren und Salzen der Sulfate oder Phosphate von ethoxyliertem Di- oder Tristyrylphenol bestehenden Gruppe ausgewählt ist.

4. Co-Formulierung nach Anspruch 3, wobei das oligomere oder polymere Tensid mit mindestens einer Poly(C₂-C₄-alkylenoxid)-Gruppe ein Ethylenoxid-co-Propylenoxid-Blockcopolymer umfasst.

5. Co-Formulierung nach einem der vorhergehenden Ansprüche, wobei die organische Pestizidverbindung PC1 aus der aus Pyraclostrobin, Imazalil, Dodemorphacetat, Pyrimethanil, Difenoconazol, Ipconazol, Trifloxystrobin, Fenoxanil, Carboxin, Metrafenon und Acetamiprid und Mischungen davon bestehenden Gruppe ausgewählt ist.

6. Co-Formulierung nach Anspruch 5, wobei es sich bei der organischen Pestizidverbindung PC1 um Pyraclostrobin handelt.

7. Co-Formulierung nach einem der vorhergehenden Ansprüche, enthaltend
i. 0,2 bis 5 Gew.-%, bezogen auf das Gesamtgewicht der Co-Formulierung, Metalaxyl,
ii. 0,2 bis 15 Gew.-%, bezogen auf das Gesamtgewicht der Co-Formulierung, der mindestens einen organischen Pestizidverbindung PC1,
iii. 0,2 bis 10 Gew.-%, bezogen auf das Gesamtgewicht der Co-Formulierung, des mindestens einen Salzes eines Oligomers oder Polymers mit einer Vielzahl von Arylsulfonatgruppen, wobei die Gesamtmenge an Tensid 0,5 bis 20 Gew.-%, bezogen auf das Gesamtgewicht der Co-Formulierung, beträgt, und
iv. mindestens 50 Gew.-%, bezogen auf das Gesamtgewicht der Co-Formulierung, an Wasser.

8. Co-Formulierung nach einem der vorhergehenden Ansprüche, weiterhin umfassend eine organische Pestizidverbindung PC2 mit einem Schmelzpunkt von über 100°C und mit einer Löslichkeit in Wasser von maximal 5 g/l bei 20°C.

9. Co-Formulierung nach Anspruch 8, wobei die organische Pestizidverbindung PC2 aus der aus Triticonazol, Fluxapyroxad, Boscalid, Metconazol, Dimethomorph, Prochloraz, Thiophanat-methyl, Iprodion, Epoxiconazol, Fenpropimorph, Chlorothalonil, Fludioxonil, Prothioconazol, Tebuconazol, Propiconazol, Thiram, Metiram, Dithianon, Mancozeb, Dimoxystrobin, Ametoctradin, Fipronil, Rynaxypyr, Thiametoxam, Clothianidin, Thiacloprid, Imidacloprid und Dinotefuran und Mischungen davon bestehenden Gruppe ausgewählt ist.

10. Co-Formulierung nach Anspruch 8, wobei die organische Pestizidverbindung PC2 aus der aus 2-[2-Chlor-4-(4-chlorphenoxy)phenyl]-1-(1,2,4-triazol-1-yl)pent-3-in-2-ol, 2-[4-(4-Chlorphenoxy)-2-(trifluormethyl)phenyl]-1-(1,2,4-triazol-1-yl)propan-2-ol und 2-[4-(4-Chlorphenoxy)-2-(trifluormethyl)phenyl]-3-methyl-1-(1,2,4-triazol-1-y1)butan-2-ol und Mischungen davon bestehenden Gruppe ausgewählt ist.

11. Co-Formulierung nach einem der Ansprüche 8, 9 oder 10, wobei die Konzentration der organischen Pestizidverbindung PC2 0,1 bis 25 Gew.-%, insbesondere bezogen auf das Gewicht der Co-Formulierung, beträgt.

12. Co-Formulierung nach einem der vorhergehenden Ansprüche, weiterhin enthaltend mindestens einen aliphatischen Alkohol mit mindestens einer OH-Gruppe.

13. Co-Formulierung nach einem der vorhergehenden Ansprüche, weiterhin umfassend mindestes ein Verdickungsmittel, insbesondere mindestens ein Verdickungsmittel auf Polysaccharidbasis.

14. Verfahren zur Herstellung einer wie in einem der vorhergehenden Ansprüche definierten wässrigen Co-Formulierung von Metalaxyl, wobei das Verfahren die folgenden Schritte umfasst:
a) die Bereitstellung einer Suspension von Metalaxyl in einer Wasser und mindestens ein Tensid, das mindestens ein Salz eines Oligomers oder Polymers mit einer Vielzahl von Arylsulfonatgruppen umfasst, enthaltenden wässrigen Phase,
b) das Behandeln der Suspension, bis mindestens 98% des in der wässrigen Suspension von Schritt a) vorhandenen Metalaxyl in gelöster Form vorliegt, unter Erhalt einer wässrigen Zusammensetzung von Metalaxyl, in der Metalaxyl in gelöster Form vorliegt,
c) das Mischen der in Schritt b) erhaltenen wässrigen Zusammensetzung von Metalaxyl mit einer wässrigen Suspension der weiteren organischen Pestizidverbindung PC1.

15. Verfahren nach Anspruch 14, wobei Schritt b) das Mischen einer Suspension von Metalaxyl mit einer wässrigen Lösung des Tensids umfasst.

16. Nicht-therapeutische Verwendung der Zusammensetzung nach einem der Ansprüche 1 bis 13 zur Bekämpfung von phytopathogenen Pilzen oder zur Verbesserung der Pflanzengesundheit oder zur Saatgutbehandlung.

## Revendications

1. Co-formulation aqueuse de métalaxyl contenant
i. du métalaxyl ;
ii. au moins un composé de type pesticide organique PC1, qui possède une solubilité dans l'eau d'au plus 1 g/l à 20 °C et un point de fusion dans la plage de 40 à 100 °C ; et
iii. une phase aqueuse contenant de l'eau et au moins un tensioactif ;
l'au moins un composé de type pesticide organique PC1 étant présent sous la forme de particules en suspension dans la phase aqueuse et dans laquelle au moins 95 % du métalaxyl présent dans la co-formulation aqueuse est présent dissous dans la phase aqueuse et dans laquelle le tensioactif comprend au moins un sel d'un oligomère ou polymère possédant une pluralité de groupes arylsulfonate choisi dans le groupe constitué par les sels de condensats d'acide naphtalènesulfonique et de formaldéhyde, de condensats d'acide phénolsulfonique et de formaldéhyde, de condensats d'acide naphtalènesulfonique, d'urée et de formaldéhyde et de condensats d'acide phénolsulfonique, de formaldéhyde et d'urée, et des mélanges correspondants,
qui peut être obtenue par un procédé comprenant
a) la mise à disposition d'une suspension de métalaxyl dans une phase aqueuse contenant de l'eau, l'au moins un tensioactif, qui comprend l'au moins un sel d'un oligomère ou polymère possédant une pluralité de groupes arylsulfonate ;
b) le traitement de la suspension jusqu'à ce qu'au moins 98 % du métalaxyl présent dans la suspension aqueuse de l'étape a) soit présent sous forme dissoute, pour obtenir une composition aqueuse de métalaxyl, dans laquelle le métalaxyl est présent sous forme dissoute ;
c) le mélange de la composition aqueuse de métalaxyl obtenue dans l'étape b) avec une suspension aqueuse du composé de type pesticide organique PC1 supplémentaire.

2. Co-formulation selon la revendication 1, le tensioactif comprenant en outre un tensioactif oligomérique ou polymérique possédant au moins un groupe poly (oxyde de C₂₋₄-alkylène).

3. Co-formulation selon la revendication 2, le tensioactif oligomérique ou polymérique possédant au moins un groupe poly (oxyde de C₂₋₄-alkylène) étant choisi dans le groupe constitué par des copolymères à blocs d'oxyde d'éthylène-co-oxyde de propylène, des polymères greffés ou en peigne possédant une pluralité de chaînes latérales poly (oxyde de C₂₋₄-alkylène) fixées à un squelette polymérique de monomères éthyléniquement insaturés polymérisés, des polymères greffés ou en peigne contenant un squelette de poly-oxyde de C₂₋₄-alkylène et des chaînes latérales polymériques de monomères éthyléniquement insaturés polymérisés, et des sels des sulfates ou des phosphates de distyrylphénol ou tristyrylphénol éthoxylé.

4. Co-formulation selon la revendication 3, le tensioactif oligomérique ou polymérique possédant au moins un groupe poly (oxyde de C₂₋₄-alkylène) comprenant un copolymère à blocs d'oxyde d'éthylène-co-oxyde de propylène.

5. Co-formulation selon l'une quelconque des revendications précédentes, le composé de type pesticide organique PC1 étant choisi dans le groupe constitué par la pyraclostrobine, l'imazalil, l'acétate de dodémorph, le pyriméthanil, le difénoconazole, l'ipconazole, la trifloxystrobine, le fénoxanil, la carboxine, la metrafénone et l'acétamiprid et des mélanges correspondants.

6. Co-formulation selon la revendication 5, le composé de type pesticide organique PC1 étant la pyraclostrobine.

7. Co-formulation selon l'une quelconque des revendications précédentes, contenant
i. 0,2 à 5 % en poids, sur la base du poids total de la co-formulation, de métalaxyl ;
ii. 0,2 à 15 % en poids, sur la base du poids total de la co-formulation, de l'au moins un composé de type pesticide organique PC1 ;
iii. 0,2 à 10 % en poids, sur la base du poids total de la co-formulation, de l'au moins un sel d'un oligomère ou polymère possédant une pluralité de groupes arylsulfonate, la quantité totale de tensioactif étant de 0,5 à 20 % en poids, sur la base du poids total de la co-formulation ; et
iv. au moins 50 % en poids, sur la base du poids total de la co-formulation, d'eau.

8. Co-formulation selon l'une quelconque des revendications précédentes, comprenant en outre un composé de type pesticide organique PC2, possédant un point de fusion supérieur à 100 °C et possédant une solubilité dans l'eau d'au plus 5 g/l à 20 °C.

9. Co-formulation selon la revendication 8, le composé de type pesticide organique PC2 étant choisi dans le groupe constitué par le triticonazole, le fluxapyroxad, le boscalid, le metconazole, le diméthomorph, le prochloraz, le thiophanate-méthyl, l'iprodione, l'époxiconazole, le fenpropimorph, le chlorothalonil, le fludioxonil, le prothioconazole, le tébuconazole, le propiconazole, le thiram, le métiram, le dithianon, le mancozeb, la dimoxystrobine, l'amétoctradin, le fipronil, le rynaxypyr, le thiamétoxam, la clothianidine, le thiacloprid, l'imidacloprid et le dinotéfuran et des mélanges correspondants.

10. Co-formulation selon la revendication 8, le composé de type pesticide organique PC2 étant choisi dans le groupe constitué par le 2-[2-chloro-4-(4-chlorophénoxy)phényl]-1-(1,2,4-triazol-1-yl)pent-3-yn-2-ol, le 2-[4-(4-chlorophénoxy)-2-(trifluorométhyl)-phényl]-1-(1,2,4-triazol-1-yl)propan-2-ol et le 2-[4-(4-chlorophénoxy)-2-(trifluorométhyl)phényl]-3-méthyl-1-(1,2,4-triazol-1-yl)butan-2-ol et des mélanges correspondants.

11. Co-formulation selon l'une quelconque des revendications 8, 9 et 10, dans laquelle la concentration du composé de type pesticide organique PC2 est de 0,1 à 25 % en poids, en particulier sur la base du poids de la co-formulation.

12. Co-formulation selon l'une quelconque des revendications précédentes, qui contient en outre au moins un alcool aliphatique possédant au moins un groupe OH.

13. Co-formulation selon l'une quelconque des revendications précédentes, comprenant en outre au moins un épaississant, en particulier au moins un épaississant à base de polysaccharide.

14. Procédé pour la production d'une co-formulation aqueuse de métalaxyl telle que définie dans l'une quelconque des revendications précédentes, le procédé comprenant les étapes suivantes :
a) mise à disposition d'une suspension de métalaxyl dans une phase aqueuse contenant de l'eau, au moins un tensioactif, qui comprend l'au moins un sel d'un oligomère ou polymère possédant une pluralité de groupes arylsulfonate,
b) traitement de la suspension jusqu'à ce qu'au moins 98 % du métalaxyl présent dans la suspension aqueuse de l'étape a) soit présent sous forme dissoute, pour obtenir une composition aqueuse de métalaxyl, dans lequel le métalaxyl est présent sous forme dissoute ;
c) mélange de la composition aqueuse de métalaxyl obtenue dans l'étape b) avec une suspension aqueuse du composé de type pesticide organique PC1 supplémentaire.

15. Procédé selon la revendication 14, dans lequel l'étape b) comprend le mélange d'une suspension de métalaxyl avec une solution aqueuse du tensioactif.

16. Utilisation non thérapeutique de la composition selon l'une quelconque des revendications 1 à 13 pour la lutte contre des champignons phytopathogènes ou pour l'amélioration de la santé de végétaux ou pour le traitement de graines.
